# EUROPEAN PATENT SPECIFICATION

(11) **EP 4 141 416 B1**
(45) Date of publication and mention of the grant of the patent: **08.10.2025**
(21) Application number: 22183103.5
(22) Date of filing: 15.12.2017
(51) Int. Cl.: G01N 21/25, G01N 21/64, G01N 21/77

(54) **INTEGRATED DEVICE AND METHOD OF FORMING THE SAME**
INTEGRIERTE VORRICHTUNG UND VERFAHREN ZU DEREN BILDUNG
DISPOSITIF INTÉGRÉ ET PROCÉDÉ DE FORMATION DE CELUI-CI

(30) Priority: 16.12.2016 US 201662435693 P
(43) Date of publication of application: 01.03.2023
(62) Divisional of application: 17826392.7
(73) Proprietor: Quantum-Si Incorporated, Branford, CT 06405 (US)
(72) Inventor: ROTHBERG, Jonathan M., Guilford, 06437 (US); KABIRI, Ali, Madison, 06443 (US); SCHMID, Gerard, Guilford, 06437 (US); SICKLER, Jason W., Madison, 06443 (US); GLENN, Paul E., Wellesley, 02482 (US); WEST, Lawrence C., San Jose, 95120 (US); PRESTON, Kyle, Guilford, 06437 (US); GONDARENKO, Alexander, Branford, 06405 (US); CIPRIANY, Benjamin, Branford, 06405 (US); BEACH, James, Austin, 78738 (US); FIFE, Keith G., Palo Alto, 94306 (US); GHASEMI, Farshid, Guilford, 06437 (US)
(74) Representative: Carpmaels & Ransford LLP

(56) References cited:
- WO-A1-2016/187564
- WO-A1-2016/187580
- CN-A- 104 155 244
- JP-A- 2016 197 020
- US-A1- 2012 244 633
- US-A1- 2015 293 021
- US-A1- 2016 084 761

## Description

### RELATED APPLICATIONS

This application embodiments priority to U.S. Provisional Patent Application 62/435,693, titled "OPTICAL COUPLER AND WAVEGUIDE SYSTEM," filed December 16, 2016.

### FIELD OF THE APPLICATION

The present application is directed generally to devices, methods and techniques for coupling optical energy into a device and distributing optical energy to many regions of the device. The optical device may be used for performing parallel, quantitative analysis of biological and/or chemical samples.

### BACKGROUND

Detection and analysis of biological samples may be performed using biological assays ("bioassays"). Bioassays conventionally involve large, expensive laboratory equipment requiring research scientists trained to operate the equipment and perform the bioassays. Moreover, bioassays are conventionally performed in bulk such that a large amount of a particular type of sample is necessary for detection and quantitation.

Some bioassays are performed by tagging samples with luminescent markers that emit light of a particular wavelength. The markers are illuminated with a light source to cause luminescence, and the luminescent light is detected with a photodetector to quantify the amount of luminescent light emitted by the markers. Bioassays using luminescent markers conventionally involve expensive laser light sources to illuminate samples and complicated luminescent detection optics and electronics to collect the luminescence from the illuminated samples.
WO 2016/187564 A1 discloses an integrated device comprising a bio-optoelectronic chip, a semiconductor (silicon) substrate, an integrated photodiode, the device comprising a plurality of chambers and a plurality of optical waveguides configured to couple excitation energy to the chambers, and a grating coupler configured to couple the excitation energy to the waveguides on the bio-optoelectronic chip.

### SUMMARY

The invention relates to integrated devices and methods of forming integrated devices as set out in the appended set of claims.

### BRIEF DESCRIPTION OF THE DRAWINGS

Various aspects and embodiments of the application will be described with reference to the following figures. It should be appreciated that the figures are not necessarily drawn to scale. Items appearing in multiple figures are indicated by the same reference number in all the figures in which they appear.

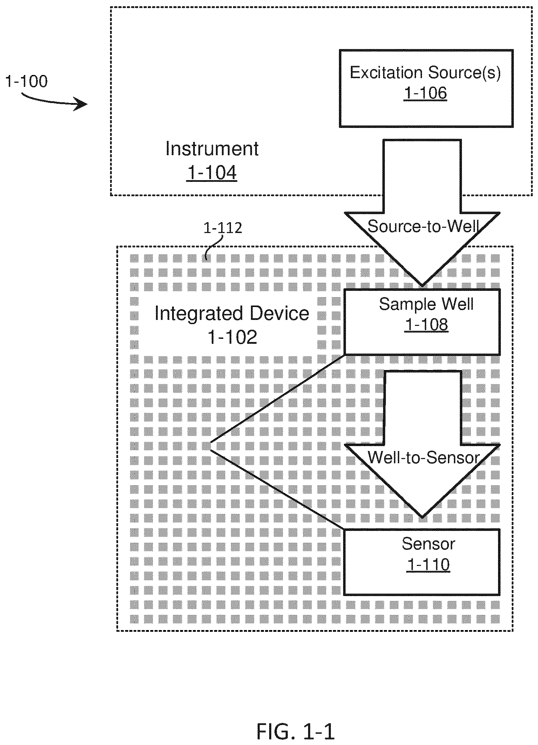

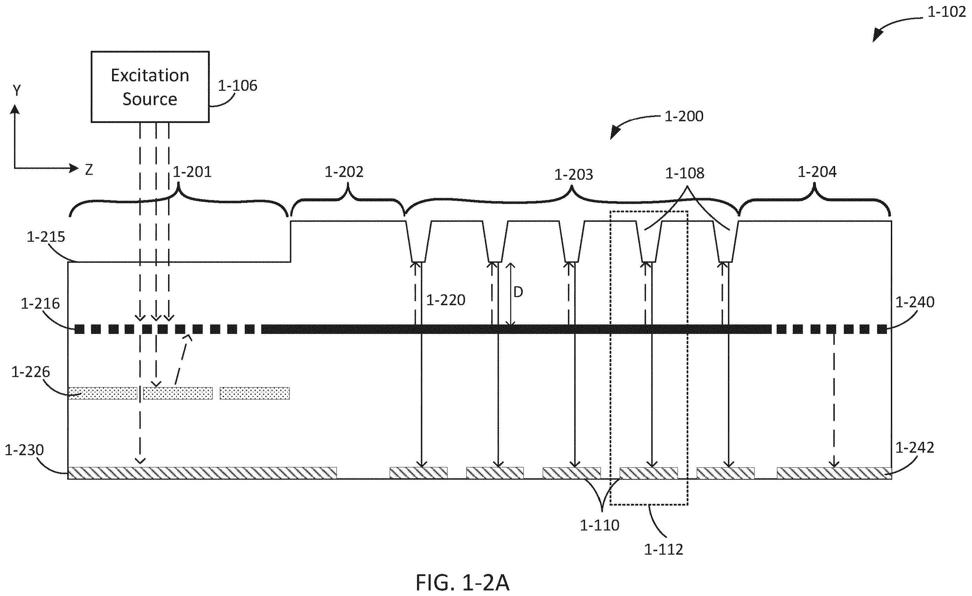

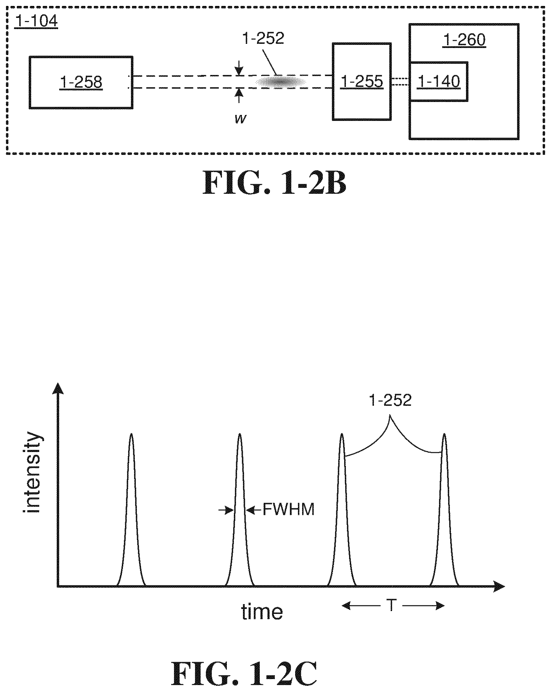

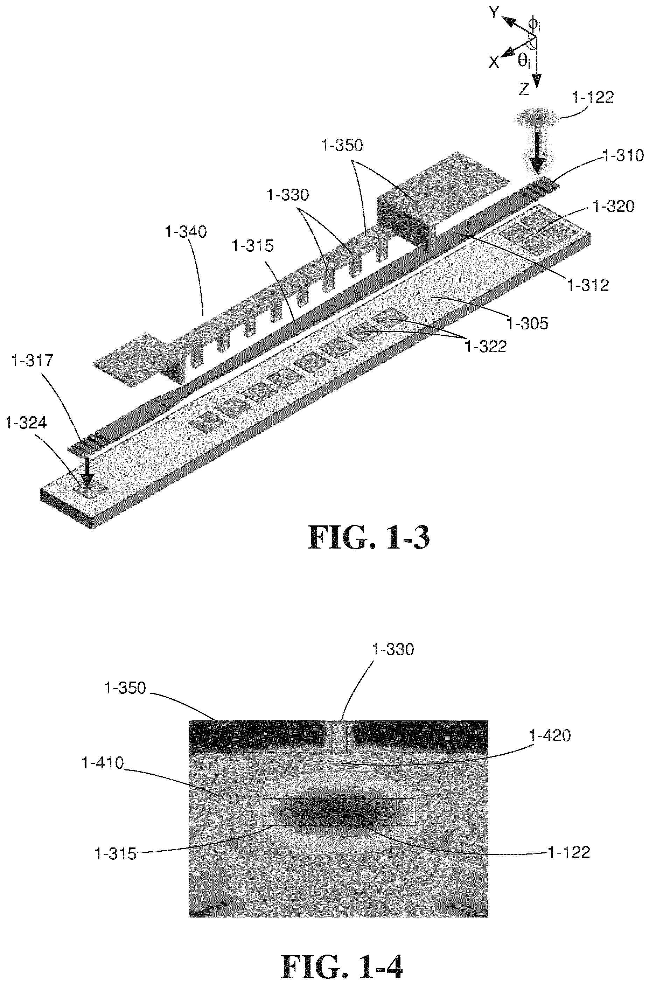

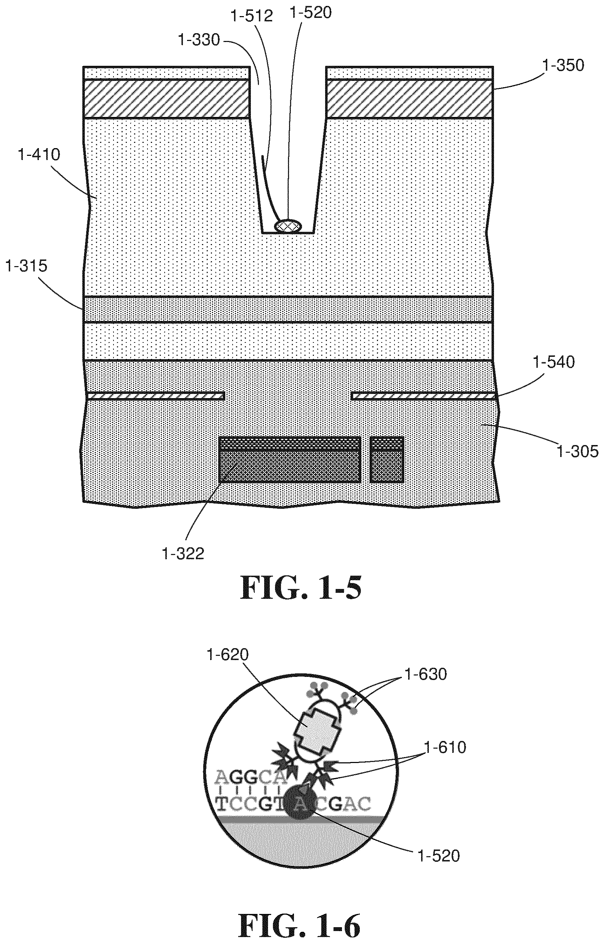

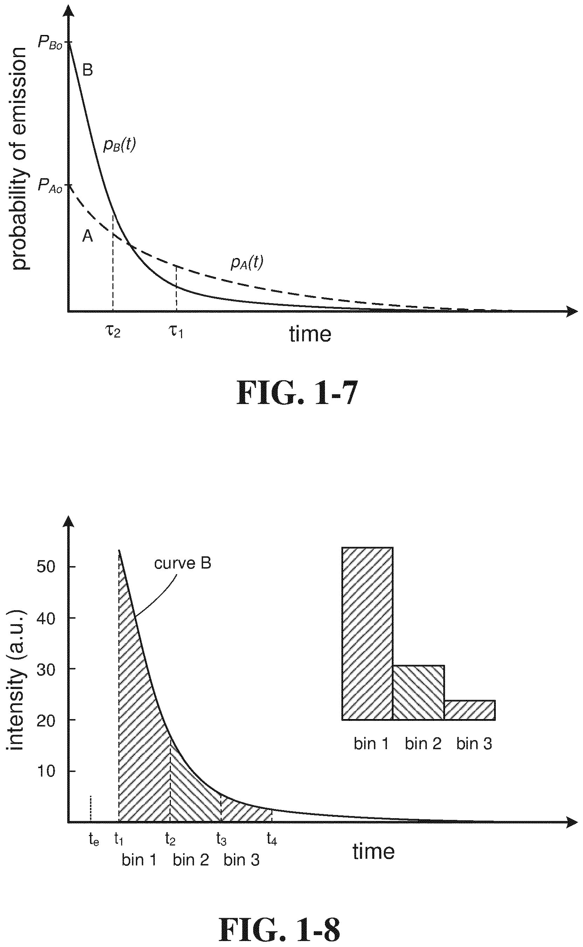

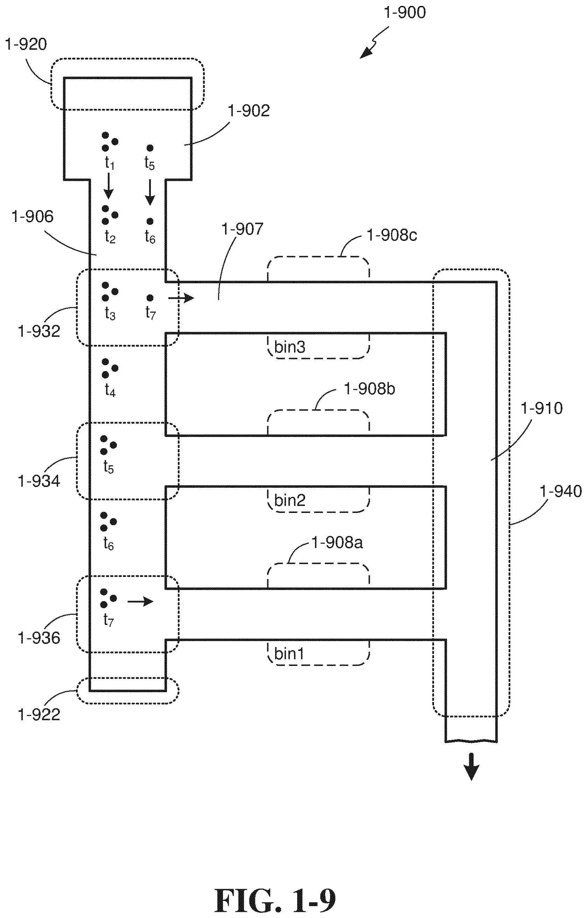

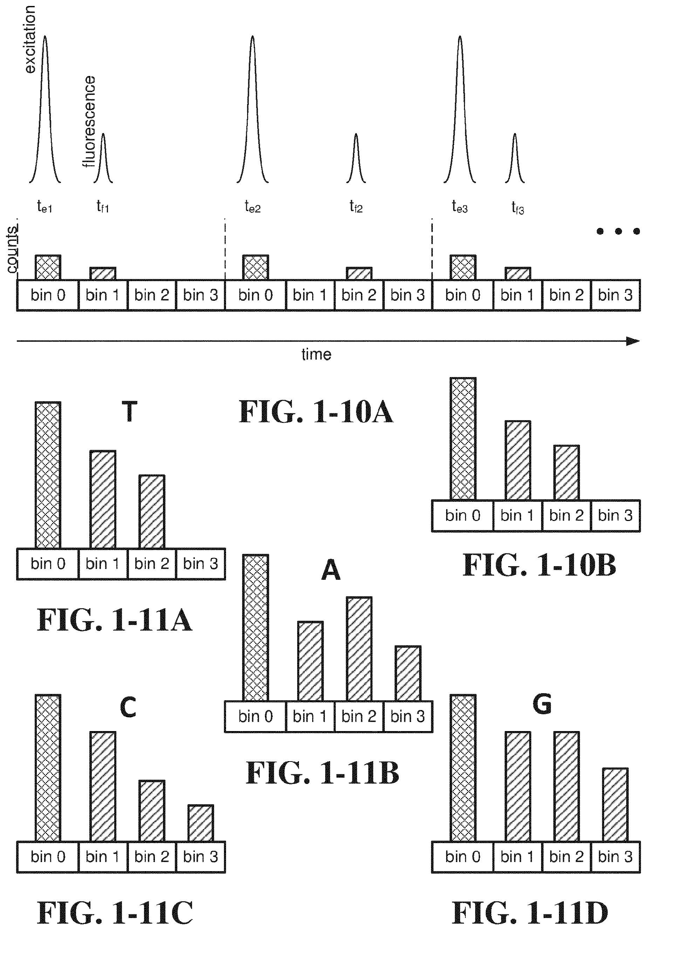

FIG. 1-1 is a block diagram of an integrated device and an instrument, according to some embodiments.
FIG. 1-2A is a schematic of excitation energy coupling to sample wells in a row of pixels and emission energy from each sample well directed towards sensors, according to some embodiments.
FIG. 1-2B is a block diagram depiction of an instrument, according to some embodiments.
FIG. 1-2C is plot of a train of optical pulses, according to some embodiments.
FIG. 1-3 is a schematic of parallel sample wells that may be excited optically by a pulsed laser via one or more waveguides and corresponding detectors for each sample well, according to some embodiments.
FIG. 1-4 is a plot of optical power depicting optical excitation of a sample well from a waveguide, according to some embodiments.
FIG. 1-5 is a schematic of a pixel having a sample well, optical waveguide, and time-binning photodetector, according to some embodiments.
FIG. 1-6 is a schematic of an exemplary biological reaction that may occur within a sample well, according to some embodiments.
FIG. 1-7 is a plot of emission probability curves for two different fluorophores having different decay characteristics.
FIG. 1-8 is a plot of time-binning detection of fluorescent emission, according to some embodiments.
FIG. 1-9 is an exemplary time-binning photodetector, according to some embodiments.
FIG. 1-10A is a schematic illustrating pulsed excitation and time-binned detection of fluorescent emission from a sample, according to some embodiments.
FIG. 1-10B is a histogram of accumulated fluorescent photon counts in various time bins after repeated pulsed excitation of a sample, according to some embodiments.
FIG. 1-11A - 1-11D are different histograms that may correspond to the four nucleotides (T, A, C, G) or nucleotide analogs, according to some embodiments.
FIG. 2-0 is a graph illustrating time-dependent transmission loss in a waveguide at three different optical powers.
FIG. 2-1A is schematic illustrating coupling of an elongated beam to a plurality of waveguides, according to some embodiments.

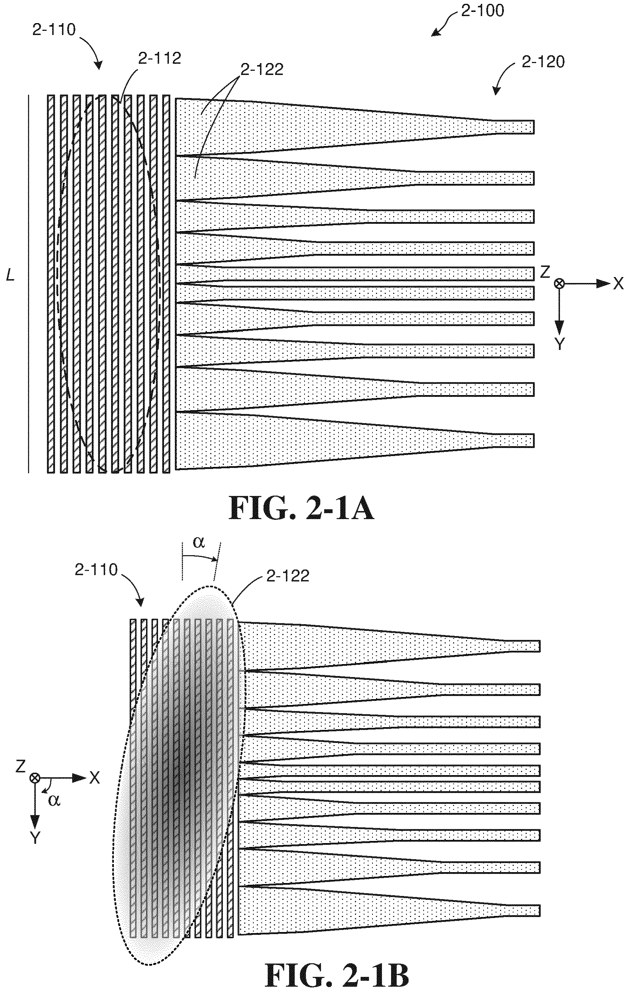

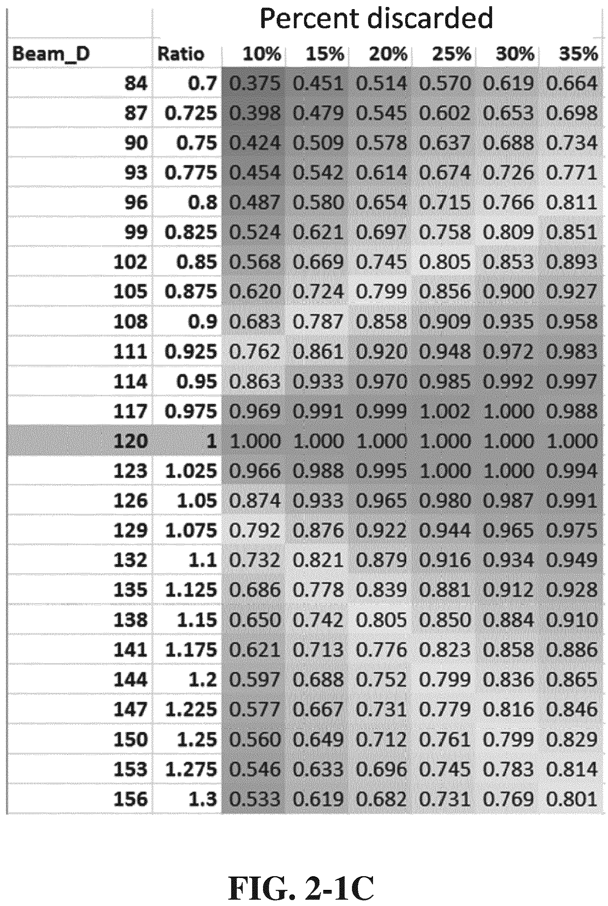

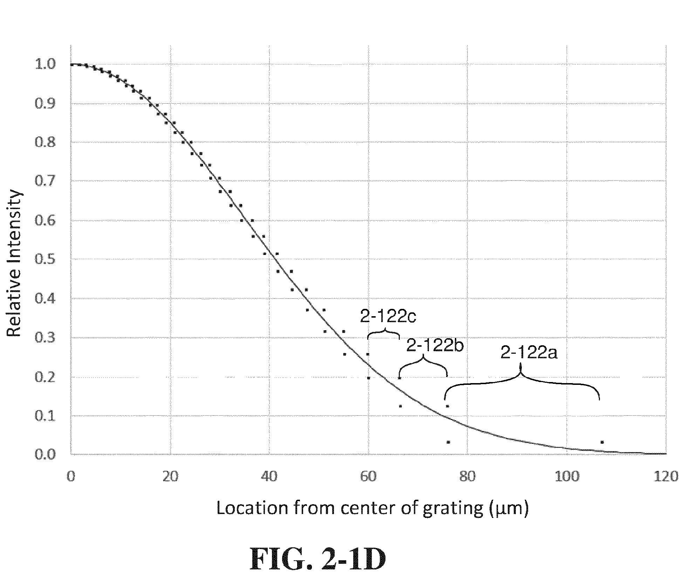

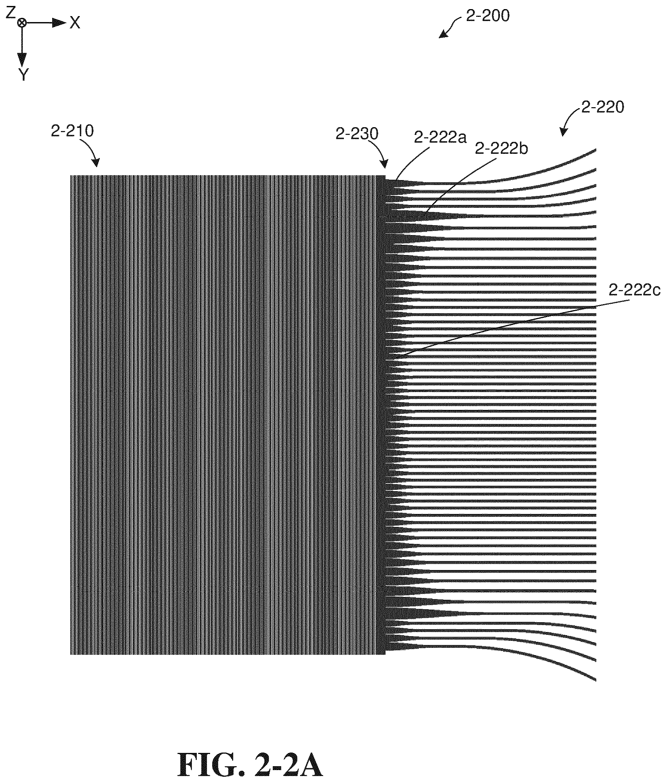

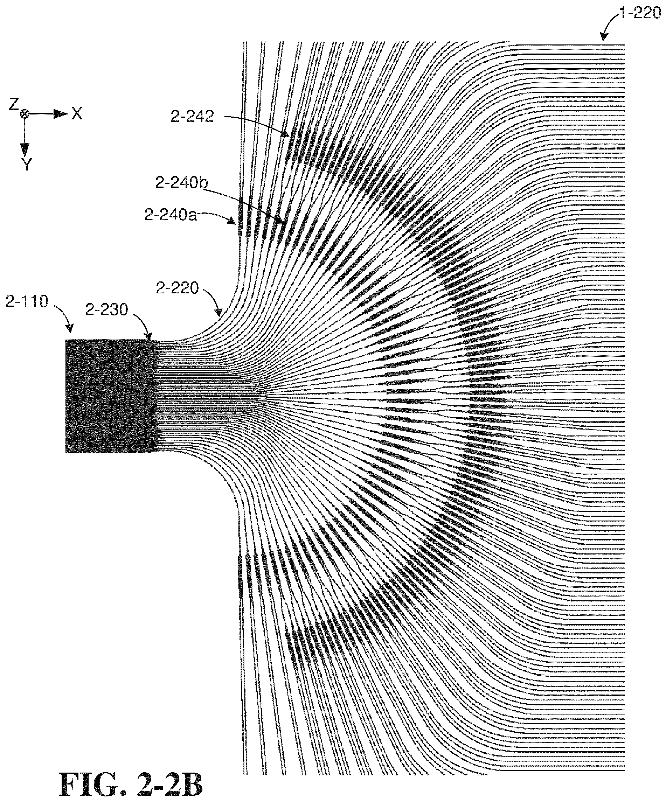

FIG. 2-1B is a schematic illustrating coupling of an elongated and rotated beam to a plurality of waveguides, according to some embodiments.
FIG. 2-1C is a plot of tolerance values of a sliced grating coupler for varying beam widths, according to some embodiments.
FIG. 2-1D is a plot of an intensity profile for a grating coupler, according to some embodiments.

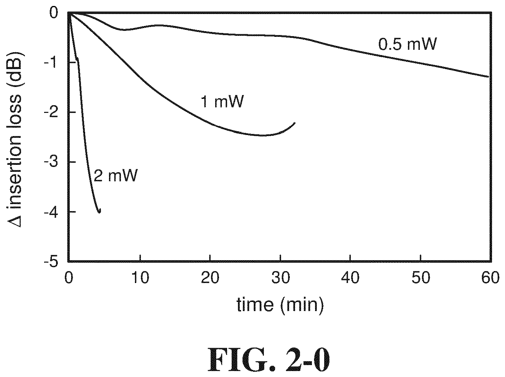

FIG. 2-2A is an exemplary sliced grating coupler, according to some embodiments.
FIG. 2-2B is an exemplary optical system of a sliced grating coupler and optical splitters, according to some embodiments.

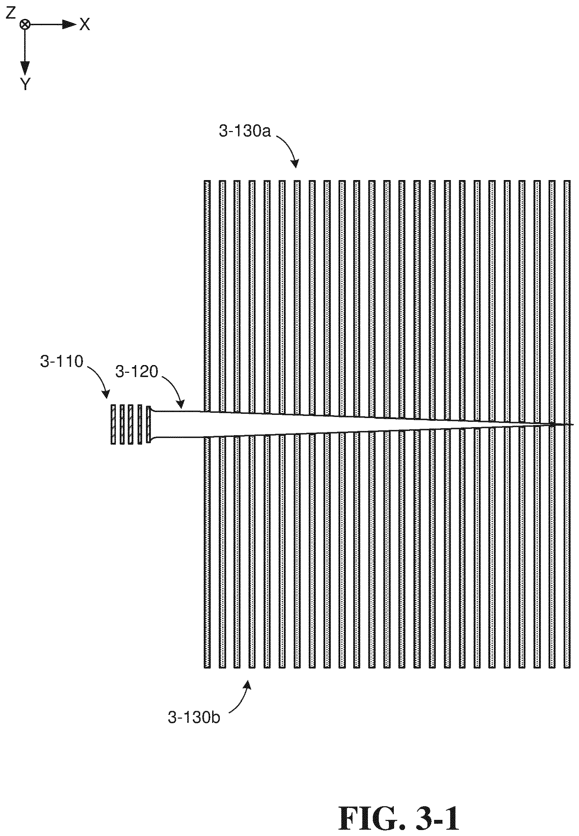

FIG. 3-1 is an exemplary optical routing layout of an integrated device, according to some embodiments.

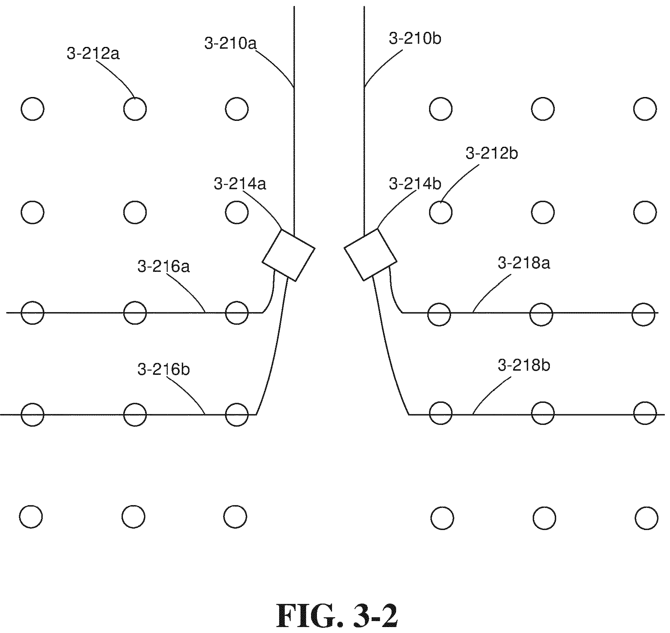

FIG. 3-2 is an exemplary optical routing layout of an integrated device, according to some embodiments.

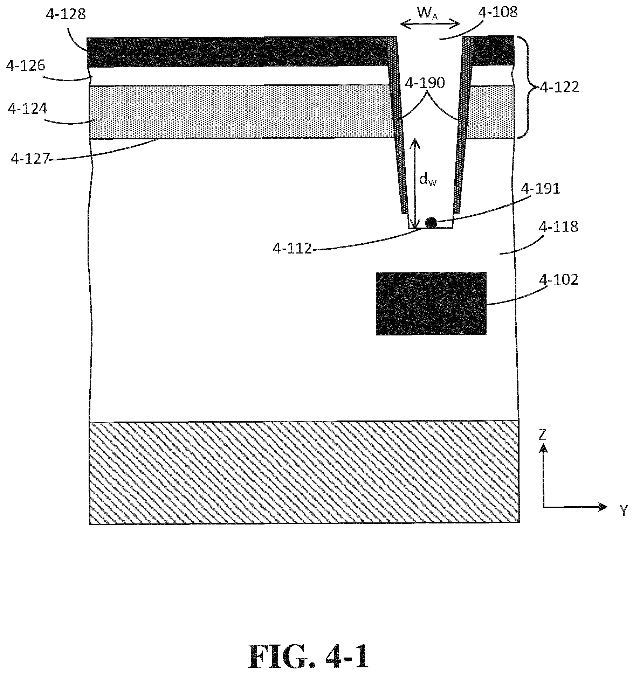

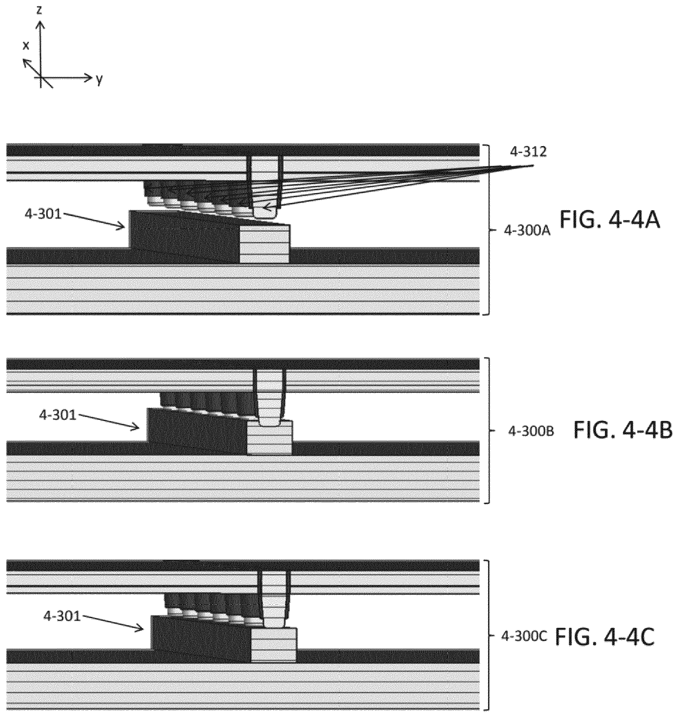

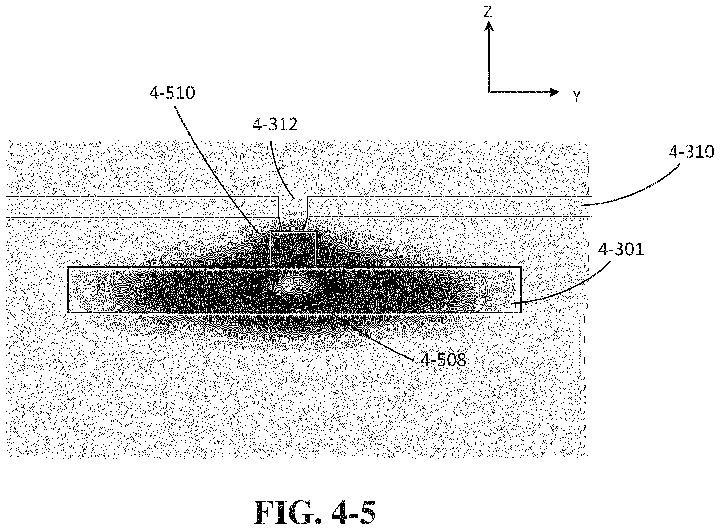

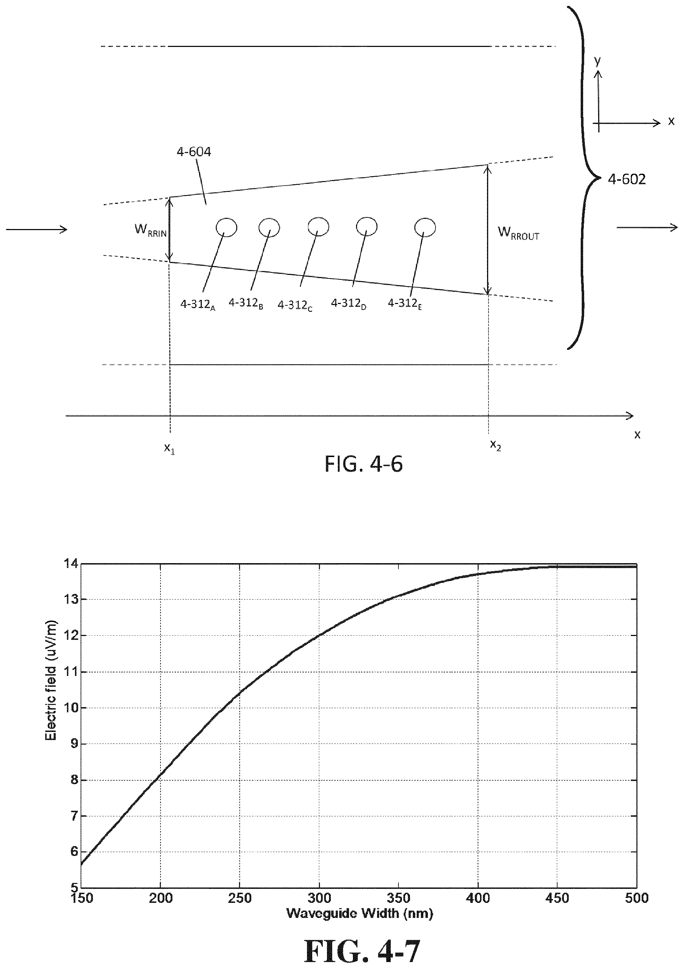

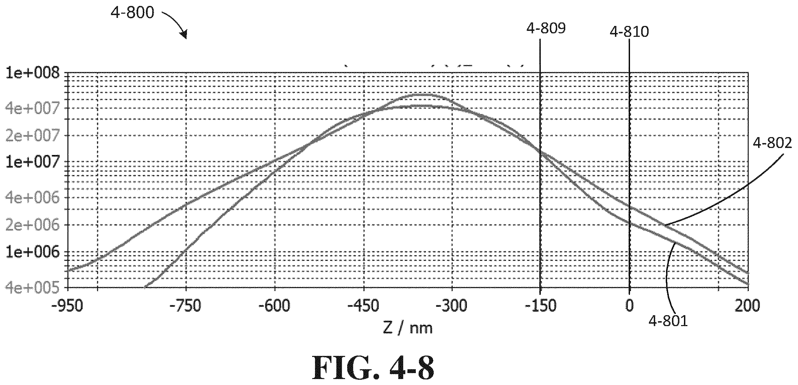

FIG. 4-1 is a cross sectional view illustrating a sample well.

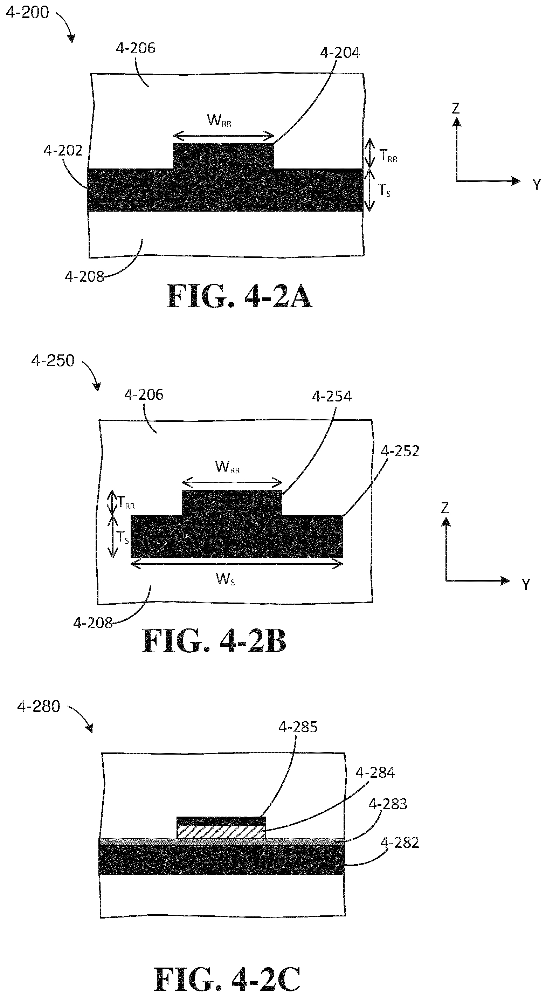

FIG. 4-2A is a cross sectional view illustrating a rib waveguide.
FIG. 4-2B is a cross sectional view illustrating a ridge waveguide.
FIG. 4-2C is a cross sectional view illustrating a rib waveguide having multiple layers.

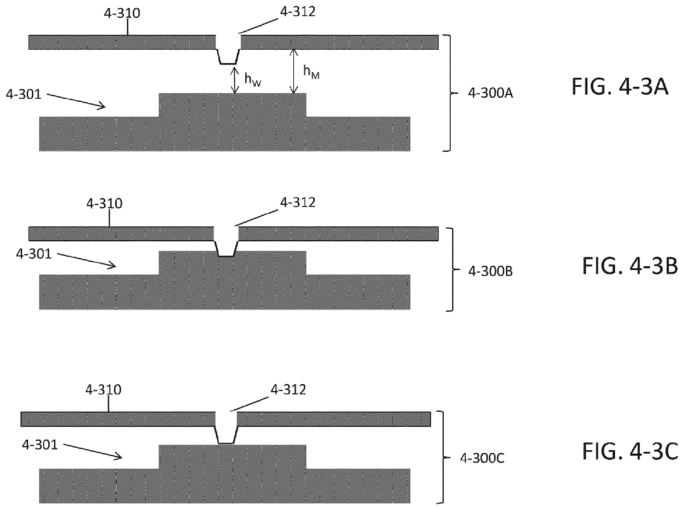

FIG. 4-3A is a cross sectional view illustrating a configuration in which a waveguide is separated from a sample well.
FIG. 4-3B is a cross sectional view illustrating a configuration in which a waveguide is in contact with a sample well.
FIG. 4-3C is a cross sectional view illustrating a configuration in which a sample well is partially disposed within a waveguide.
FIG. 4-4A is a cutaway isometric view of the configuration of FIG. 4-3A.
FIG. 4-4B is a cutaway isometric view of the configuration of FIG. 4-3B.
FIG. 4-4C is a cutaway isometric view of the configuration of FIG. 4-3C.
FIG. 4-5 is cross sectional view illustrating an optical mode in a ridge waveguide.
FIG. 4-6 is a top view illustrating a taper and a plurality of sample wells.
FIG. 4-7 is a plot illustrating the electric field of an optical mode as a function of the width of the raised region of a rib waveguide.
FIG. 4-8 is a plot illustrating a comparison between an optical mode profile associated with a waveguide having a rectangular cross section and an optical mode profile associated with rib waveguide.

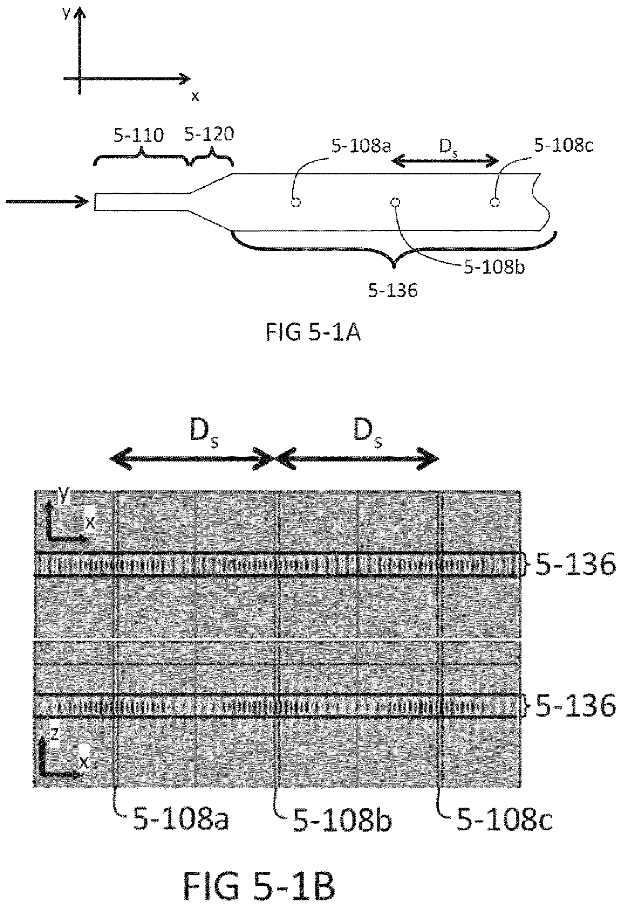

FIG. 5-1A is a planar view of a multimode waveguide.
FIG. 5-1B is a heat map illustrating power distribution along a multimode waveguide.

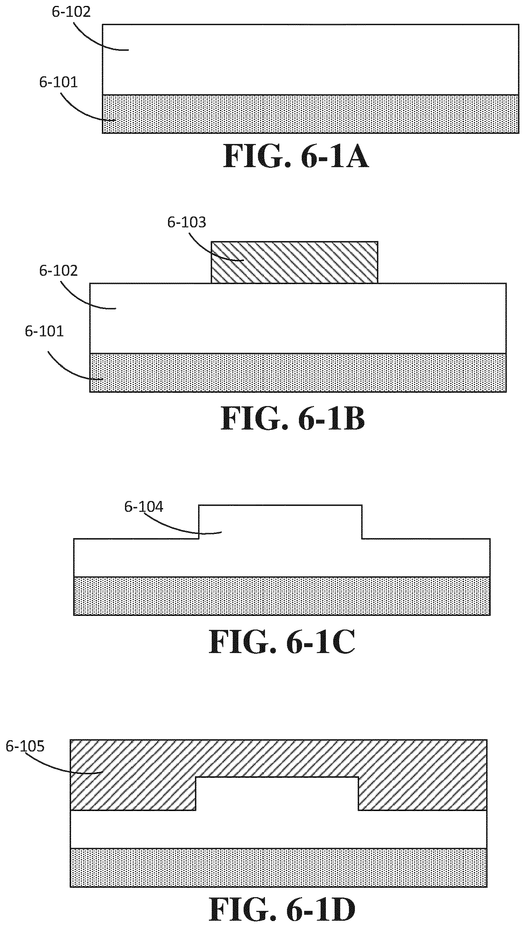

FIGs. 6-1A, 6-1B, 6-1C, and 6-1D illustrate a method for fabricating a rib waveguide using a time etch process, according to some embodiments.

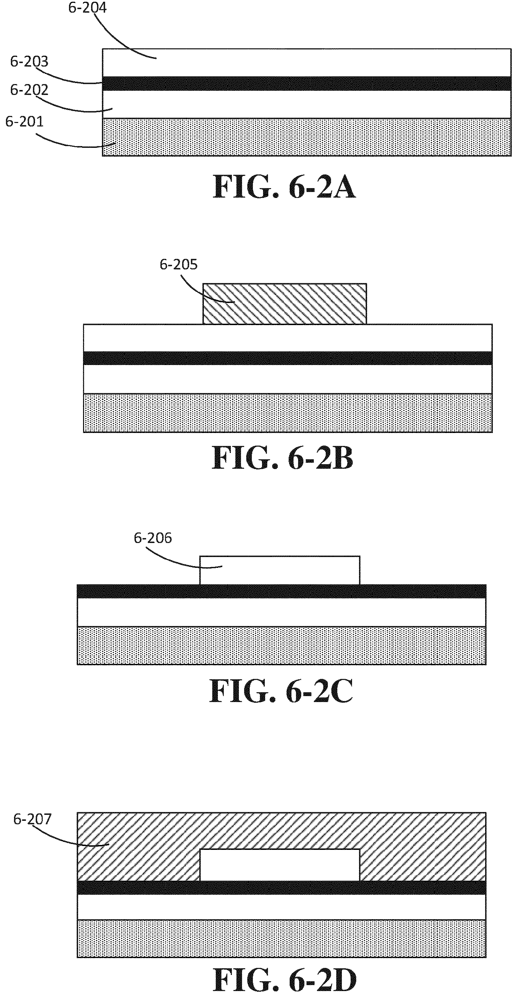

FIGs. 6-2A, 6-2A, 6-2C, and 6-2D illustrate a method for fabricating a rib waveguide using an etch stop, according to some embodiments.

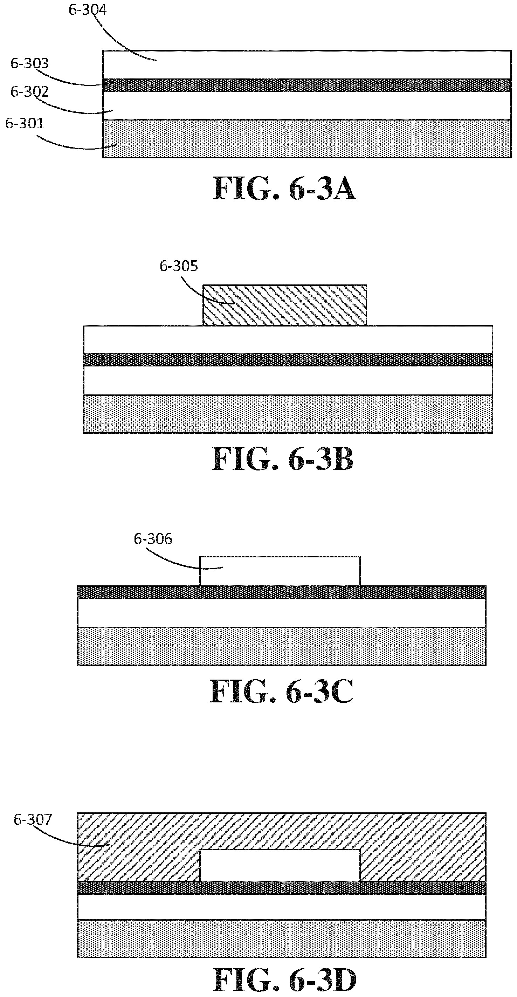

FIGs. 6-3A, 6-3B, 6-3C, and 6-3D illustrate a method for fabricating a rib waveguide using an endpoint layer, according to some embodiments.

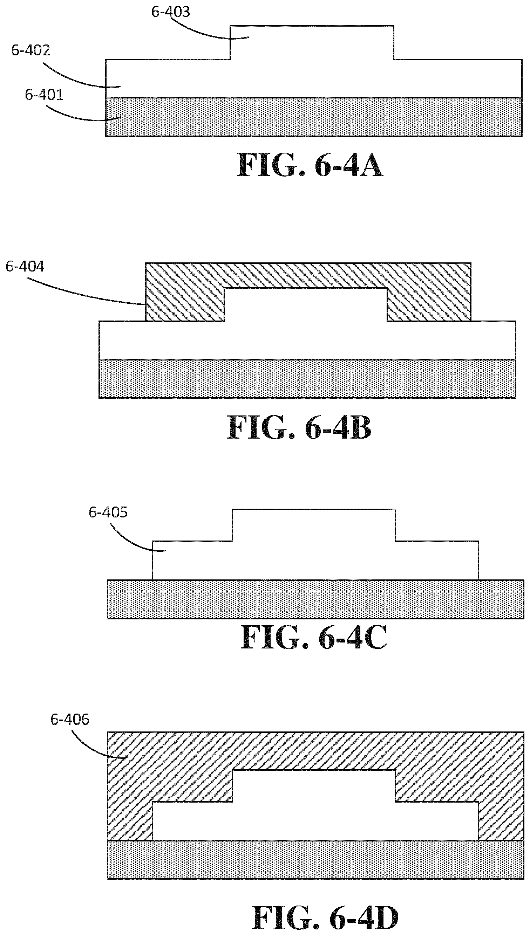

FIGs. 6-4A, 6-4B, 6-4C, and 6-4D illustrate a method for fabricating a ridge waveguide, according to some embodiments.

### DETAILED DESCRIPTION

### I. Introduction

The inventors have recognized and appreciated that a compact, high-speed apparatus for performing detection and quantitation of single molecules or particles could reduce the cost of performing complex quantitative measurements of biological and/or chemical samples and rapidly advance the rate of biochemical technological discoveries. Moreover, a cost-effective device that is readily transportable could transform not only the way bioassays are performed in the developed world, but provide people in developing regions, for the first time, access to essential diagnostic tests that could dramatically improve their health and well-being.

The inventors have also recognized and appreciated that integrating a sample well and a sensor in a single integrated device capable of measuring luminescent light emitted from biological samples reduces the cost of producing such a device such that disposable bioanalytical integrated devices may be formed. Disposable, single-use integrated devices that interface with a base instrument may be used anywhere in the world, without the constraint of requiring high-cost biological laboratories for sample analyses. Thus, automated bioanalytics may be brought to regions of the world that previously could not perform quantitative analysis of biological samples.

A pixelated sensor device with a large number of pixels (e.g., hundreds, thousands, millions or more) allows for the detection of a plurality of individual molecules or particles in parallel. The molecules may be, by way of example and not limitation, proteins, DNA, and/or RNA. Moreover, a high-speed device that can acquire data at more than one hundred frames per second allows for the detection and analysis of dynamic processes or changes that occur over time within the sample being analyzed.

The inventors have also recognized and appreciated that, when a sample is tagged with a plurality of different types of luminescent markers, any suitable characteristic of luminescent markers may be used to identify the type of marker that is present in a particular pixel of the integrated device. For example, characteristics of the luminescence emitted by the markers and/or characteristics of the excitation absorption may be used to identify the markers. In some embodiments, the emission energy of the luminescence (which is directly related to the wavelength of the light) may be used to distinguish a first type of marker from a second type of marker. Additionally, or alternatively, luminescence lifetime measurements may also be used to identify the type of marker present at a particular pixel. In some embodiments, luminescence lifetime measurements may be made with a pulsed excitation source using a sensor capable of distinguishing a time when a photon is detected with sufficient resolution to obtain lifetime information. Additionally, or alternatively, the energy of the excitation light absorbed by the different types of markers may be used to identify the type of marker present at a particular pixel. For example, a first marker may absorb light of a first wavelength, but not equally absorb light of a second wavelength, while a second marker may absorb light of the second wavelength, but not equally absorb light of the first wavelength. In this way, when more than one excitation light source, each with a different excitation energy, may be used to illuminate the sample in an interleaved manner, the absorption energy of the markers can be used to identify which type of marker is present in a sample. Different markers may also have different luminescent intensities. Accordingly, the detected intensity of the luminescence may also be used to identify the type of marker present at a particular pixel.

One non-limiting example of an application of a device contemplated by the inventors is a device capable of performing sequencing of a biomolecule, such as a nucleic acid sequence (*e.g*., DNA, RNA) or a polypeptide (*e.g*. protein) having a plurality of amino acids. Diagnostic tests that may be performed using such a device include sequencing a nucleic acid molecule in a biological sample of a subject, such as sequencing of cell free deoxyribonucleic acid molecules or expression products in a biological sample of the subject.

The present application provides devices, systems and methods for detecting biomolecules or subunits thereof, such as nucleic acid molecules. Sequencing can include the determination of individual subunits of a template biomolecule (*e.g.,* nucleic acid molecule) by synthesizing another biomolecule that is complementary or analogous to the template, such as by synthesizing a nucleic acid molecule that is complementary to a template nucleic acid molecule and identifying the incorporation of nucleotides with time (*e.g.,* sequencing by synthesis). As an alternative, sequencing can include the direct identification of individual subunits of the biomolecule.

During sequencing, signals indicative of individual subunits of a biomolecule may be collected in memory and processed in real time or at a later point in time to determine a sequence of the biomolecule. Such processing can include a comparison of the signals to reference signals that enable the identification of the individual subunits, which in some cases yields reads. Reads may be sequences of sufficient length (*e.g.,* at least about 30, 50, 100 base pairs (bp) or more) that can be used to identify a larger sequence or region, *e.g.,* that can be aligned to a location on a chromosome or genomic region or gene.

Individual subunits of biomolecules may be identified using markers. In some examples, luminescent markers are used to identify individual subunits of biomolecules. Luminescent markers (also referred to herein as "markers") may be exogenous or endogenous markers. Exogenous markers may be external luminescent markers used in a reporter and/or tag for luminescent labeling. Examples of exogenous markers may include, but are not limited to, fluorescent molecules, fluorophores, fluorescent dyes, fluorescent stains, organic dyes, fluorescent proteins, enzymes, species that participate in fluorescence resonance energy transfer (FRET), enzymes, and/or quantum dots. Such exogenous markers may be conjugated to a probe or functional group (*e.g.,* molecule, ion, and/or ligand) that specifically binds to a particular target or component. Attaching an exogenous marker to a probe allows identification of the target through detection of the presence of the exogenous marker. Examples of probes may include proteins, nucleic acid (*e.g.* DNA, RNA) molecules, lipids and antibody probes. The combination of an exogenous marker and a functional group may form any suitable probes, tags, and/or labels used for detection, including molecular probes, labeled probes, hybridization probes, antibody probes, protein probes (*e.g.,* biotin-binding probes), enzyme labels, fluorescent probes, fluorescent tags, and/or enzyme reporters.

While exogenous markers may be added to a sample, endogenous markers may be already part of the sample. Endogenous markers may include any luminescent marker present that may luminesce or "autofluoresce" in the presence of excitation energy. Autofluorescence of endogenous fluorophores may provide for label-free and noninvasive labeling without requiring the introduction of exogenous fluorophores. Examples of such endogenous fluorophores may include hemoglobin, oxyhemoglobin, lipids, collagen and elastin crosslinks, reduced nicotinamide adenine dinucleotide (NADH), oxidized flavins (FAD and FMN), lipofuscin, keratin, and/or prophyrins, by way of example and not limitation.

While some embodiments may be directed to diagnostic testing by detecting single molecules in a specimen, the inventors have also recognized that some embodiments may use the single molecule detection capabilities to perform nucleic acid (*e.g.* DNA, RNA) sequencing of one or more nucleic acid segments such as, for example, genes, or polypeptides. Nucleic acid sequencing allows for the determination of the order and position of nucleotides in a target nucleic acid molecule. Nucleic acid sequencing technologies may vary in the methods used to determine the nucleic acid sequence as well as in the rate, read length, and incidence of errors in the sequencing process. For example, some nucleic acid sequencing methods are based on sequencing by synthesis, in which the identity of a nucleotide is determined as the nucleotide is incorporated into a newly synthesized strand of nucleic acid that is complementary to the target nucleic acid molecule. Some sequencing by synthesis methods require the presence of a population of target nucleic acid molecules (*e.g.,* copies of a target nucleic acid) or a step of amplification of the target nucleic acid to achieve a population of target nucleic acids.

Having recognized the need for simple, less complex apparatuses for performing single molecule detection and/or nucleic acid sequencing, the inventors have conceived of a technique for detecting single molecules using sets of markers, such as optical (*e.g.,* luminescent) markers, to label different molecules. A tag may include a nucleotide or amino acid and a suitable marker. Markers may be detected while bound to single molecules, upon release from the single molecules, or while bound to and upon release from the single molecules. In some examples, markers are luminescent tags. Each luminescent marker in a selected set is associated with a respective molecule. For example, a set of four markers may be used to "label" the nucleobases present in DNA - each marker of the set being associated with a different nucleobase to form a tag, *e.g.,* a first marker being associated with adenine (A), a second marker being associated with cytosine (C), a third marker being associated with guanine (G), and a fourth marker being associated with thymine (T). Moreover, each of the luminescent markers in the set of markers has different properties that may be used to distinguish a first marker of the set from the other markers in the set. In this way, each marker is uniquely identifiable using one or more of these distinguishing characteristics. By way of example and not limitation, the characteristics of the markers that may be used to distinguish one marker from another may include an emission wavelength or band of emission wavelengths of light emitted by the marker in response to excitation, a wavelength or band of wavelengths of the excitation energy that excites a particular marker, the temporal characteristics of the light emitted by the marker (*e.g.,* emission decay time periods), and/or temporal characteristics of a marker's response to emission energy (*e.g.,* probability of absorbing an excitation photon). Accordingly, luminescent markers may be identified or discriminated from other luminescent markers based on detecting these properties. Such identification or discrimination techniques may be used alone or in any suitable combination. In the context of nucleic acid sequencing, distinguishing a marker from among a set of four markers based on one or more the marker's emission characteristics may uniquely identify a nucleobase associated with the marker.

### II. Overview of the System

The system may include an integrated device and an instrument configured to interface with the integrated device. The integrated device may include an array of pixels, where a pixel includes a sample well and at least one sensor. A surface of the integrated device may have a plurality of sample wells, where a sample well is configured to receive a sample from a specimen placed on the surface of the integrated device. A specimen may contain multiple samples, and in some embodiments, different types of samples. The plurality of sample wells may have a suitable size and shape such that at least a portion of the sample wells receive one sample from a specimen. In some embodiments, the number of samples within a sample well may be distributed among the sample wells such that some sample wells contain one sample with others contain zero, two or more samples.

In some embodiments, a specimen may contain multiple single-stranded DNA templates, and individual sample wells on a surface of an integrated device may be sized and shaped to receive a single-stranded DNA template. Single-stranded DNA templates may be distributed among the sample wells of the integrated device such that at least a portion of the sample wells of the integrated device contain a single-stranded DNA template. The specimen may also contain tagged dNTPs which then enter in the sample well and may allow for identification of a nucleotide as it is incorporated into a strand of DNA complementary to the single-stranded DNA template in the sample well. In such an example, the "sample" may refer to both the single-stranded DNA and the tagged dNTP currently being incorporated by a polymerase. In some embodiments, the specimen may contain single-stranded DNA templates and tagged dNTPS may be subsequently introduced to a sample well as nucleotides are incorporated into a complementary strand of DNA within the sample well. In this manner, timing of incorporation of nucleotides may be controlled by when tagged dNTPs are introduced to the sample wells of an integrated device.

Excitation energy is provided from an excitation source located separate from the pixel array of the integrated device. The excitation energy is directed at least in part by elements of the integrated device towards one or more pixels to illuminate an illumination region within the sample well. A marker or tag may then emit emission energy when located within the illumination region and in response to being illuminated by excitation energy. In some embodiments, one or more excitation sources are part of the instrument of the system where components of the instrument and the integrated device are configured to direct the excitation energy towards one or more pixels.

Emission energy emitted by a sample may then be detected by one or more sensors within a pixel of the integrated device. Characteristics of the detected emission energy may provide an indication for identifying the marked associated with the emission energy. Such characteristics may include any suitable type of characteristic, including an arrival time of photons detected by a sensor, an amount of photons accumulated over time by a sensor, and/or a distribution of photons across two or more sensors. In some embodiments, a sensor may have a configuration that allows for the detection of one or more timing characteristics associated with a sample's emission energy (*e.g.,* fluorescence lifetime). The sensor may detect a distribution of photon arrival times after a pulse of excitation energy propagates through the integrated device, and the distribution of arrival times may provide an indication of a timing characteristic of the sample's emission energy (*e.g.,* a proxy for fluorescence lifetime). In some embodiments, the one or more sensors provide an indication of the probability of emission energy emitted by the marker or tag (*e.g.,* fluorescence intensity). In some embodiments, a plurality of sensors may be sized and arranged to capture a spatial distribution of the emission energy. Output signals from the one or more sensors may then be used to distinguish a marker from among a plurality of markers, where the plurality of markers may be used to identify a sample within the specimen. In some embodiments, a sample may be excited by multiple excitation energies, and emission energy and/or timing characteristics of the emission energy emitted by the sample in response to the multiple excitation energies may distinguish a marker from a plurality of markers.

A schematic overview of the system 1-100 is illustrated in FIG. 1-1. The system comprises both an integrated device 1-102 that interfaces with an instrument 1-104. In some embodiments, instrument 1-104 may include one or more excitation sources 1-106 integrated as part of instrument 1-104. In some embodiments, an excitation source may be external to both instrument1-104 and integrated device 2-102, and instrument 1-104 may be configured to receive excitation energy from the excitation source and direct excitation energy to the integrated device. The integrated device may interface with the instrument using any suitable socket for receiving the integrated device and holding it in precise optical alignment with the excitation source. The excitation source 1-106 may be configured to provide excitation energy to the integrated device 1-102. As illustrated schematically in FIG. 1-1, the integrated device 1-102 has a plurality of pixels 1-112, where at least a portion of pixels may perform independent analysis of a sample. Such pixels 1-112 may be referred to as "passive source pixels" since a pixel receives excitation energy from a source 1-106 separate from the pixel, where excitation energy from the source excites some or all of the pixels 1-112. Excitation source 1-106 may be any suitable light source. Examples of suitable excitation sources are described in U.S. Patent Application No. 14/821,688, filed August 7, 2015, titled "INTEGRATED DEVICE FOR PROBING, DETECTING AND ANALYZING MOLECULES". In some embodiments, excitation source 1-106 includes multiple excitation sources that are combined to deliver excitation energy to integrated device 1-102. The multiple excitation sources may be configured to produce multiple excitation energies or wavelengths.

A pixel 1-112 has a sample well 1-108 configured to receive a sample and a sensor 1-110 for detecting emission energy emitted by the sample in response to illuminating the sample with excitation energy provided by the excitation source 1-106. In some embodiments, sample well 1-108 may retain the sample in proximity to a surface of integrated device 1-102, which may ease delivery of excitation energy to the sample and detection of emission energy from the sample.

Optical elements for coupling excitation energy from excitation energy source 1-106 to integrated device 1-102 and guiding excitation energy to the sample well 1-108 are located both on integrated device 1-102 and the instrument 1-104. Source-to-well optical elements may comprise one or more grating couplers located on integrated device1-102 to couple excitation energy to the integrated device and waveguides to deliver excitation energy from instrument1-104 to sample wells in pixels 1-112. One or more optical splitter elements may be positioned between a grating coupler and the waveguides. The optical splitter may couple excitation energy from the grating coupler and deliver excitation energy to at least one of the waveguides. In some embodiments, the optical splitter may have a configuration that allows for delivery of excitation energy to be substantially uniform across all the waveguides such that each of the waveguides receives a substantially similar amount of excitation energy. Such embodiments may improve performance of the integrated device by improving the uniformity of excitation energy received by sample wells of the integrated device.

Sample well 1-108, a portion of the excitation source-to-well optics, and the sample well-to-sensor optics are located on integrated device 1-102. Excitation source 1-106 and a portion of the source-to-well components are located in instrument 1-104. In some embodiments, a single component may play a role in both coupling excitation energy to sample well 1-108 and delivering emission energy from sample well 1-108 to sensor 1-110. Examples of suitable components, for coupling excitation energy to a sample well and/or directing emission energy to a sensor, to include in an integrated device are described in U.S. Pat. Application 14/821,688 titled "INTEGRATED DEVICE FOR PROBING, DETECTING AND ANALYZING MOLECULES," and U.S. Pat. Application 14/543,865 titled "INTEGRATED DEVICE WITH EXTERNAL LIGHT SOURCE FOR PROBING, DETECTING, AND ANALYZING MOLECULES".

Pixel 1-112 is associated with its own individual sample well 1-108 and at least one sensor 1-110. The plurality of pixels of integrated device 1-102 may be arranged to have any suitable shape, size, and/or dimensions. Integrated device 1-102 may have any suitable number of pixels. The number of pixels in integrated device 2-102 may be in the range of approximately 10,000 pixels to 1,000,000 pixels or any value or range of values within that range. In some embodiments, the pixels may be arranged in an array of 512 pixels by 512 pixels. Integrated device 1-102 may interface with instrument 1-104 in any suitable manner. In some embodiments, instrument 1-104 may have an interface that detachably couples to integrated device 1-104 such that a user may attach integrated device 1-102 to instrument 1-104 for use of integrated device 1-102 to analyze a sample and remove integrated device 1-102 from instrument 1-104 to allow for another integrated device to be attached. The interface of instrument 1-104 may position integrated device 1-102 to couple with circuitry of instrument 1-104 to allow for readout signals from one or more sensors to be transmitted to instrument 1-104. Integrated device 1-102 and instrument 1-104 may include multi-channel, high-speed communication links for handling data associated with large pixel arrays (*e.g.,* more than 10,000 pixels).

Instrument 1-104 may include a user interface for controlling operation of instrument 1-104 and/or integrated device 1-102. The user interface may be configured to allow a user to input information into the instrument, such as commands and/or settings used to control the functioning of the instrument. In some embodiments, the user interface may include buttons, switches, dials, and a microphone for voice commands. The user interface may allow a user to receive feedback on the performance of the instrument and/or integrated device, such as proper alignment and/or information obtained by readout signals from the sensors on the integrated device. In some embodiments, the user interface may provide feedback using a speaker to provide audible feedback. In some embodiments, the user interface may include indicator lights and/or a display screen for providing visual feedback to a user.

In some embodiments, instrument 2-104 may include a computer interface configured to connect with a computing device. Computer interface may be a USB interface, a FireWire interface, or any other suitable computer interface. Computing device may be any general purpose computer, such as a laptop or desktop computer. In some embodiments, computing device may be a server (*e.g.,* cloud-based server) accessible over a wireless network via a suitable computer interface. The computer interface may facilitate communication of information between instrument 1-104 and the computing device. Input information for controlling and/or configuring the instrument 1-104 may be provided to the computing device and transmitted to instrument 1-104 via the computer interface. Output information generated by instrument 1-104 may be received by the computing device via the computer interface. Output information may include feedback about performance of instrument 1-104, performance of integrated device 2-112, and/or data generated from the readout signals of sensor 1-110.

In some embodiments, instrument 1-104 may include a processing device configured to analyze data received from one or more sensors of integrated device 1-102 and/or transmit control signals to excitation source(s) 2-106. In some embodiments, the processing device may comprise a general purpose processor, a specially-adapted processor (*e.g.,* a central processing unit (CPU) such as one or more microprocessor or microcontroller cores, a field-programmable gate array (FPGA), an application-specific integrated circuit (ASIC), a custom integrated circuit, a digital signal processor (DSP), or a combination thereof.) In some embodiments, the processing of data from one or more sensors may be performed by both a processing device of instrument 1-104 and an external computing device. In other embodiments, an external computing device may be omitted and processing of data from one or more sensors may be performed solely by a processing device of integrated device 1-104.

A cross-sectional schematic of integrated device 1-102 illustrating a row of pixels 1-112 is shown in FIG. 1-2A. Integrated device 1-102 may include coupling region 1-201, routing region 1-202, pixel region 1-203, and optical dump region 1-204. Pixel region 1-203 may include a plurality of pixels 1-112 having sample wells 1-108 positioned on surface 1-200 at a location separate from coupling region 1-201 where optical excitation energy from excitation source 1-106 couples to integrated device 1-102. One pixel 1-112, illustrated by the dotted rectangle, is a region of integrated device 1-102 that includes a sample well 1-108 and at least one sensor 1-110. As shown in FIG. 1-2A, pixels 1-108 are form on surface 1-200 of integrated device. The row of sample wells 1-108 shown in FIG. 1-2A are positioned to optically couple with waveguide 1-220.

FIG. 1-2A illustrates the path of excitation energy (shown in dashed lines) by coupling excitation source 1-106 to coupling region 1-201 of integrated device 1-102 and to sample wells 1-108. Excitation energy may illuminate a sample located within a sample well. The sample may reach an excited state in response to being illuminated by the excitation energy. When a sample is in an excited state, the sample may emit emission energy and the emission energy may be detected by one or more sensors associated with the sample well. FIG. 1-2A schematically illustrates the path of emission energy (shown as solid lines) from a sample well 1-108 to one or more sensors 1-110 of pixel 1-112. The one or more sensors 1-110 of pixel 1-112 may be configured and positioned to detect emission energy from sample well 1-108. A sensor 1-110 may refer to a suitable photodetector configured to convert optical energy into electrons. A distance between sample well 1-108 and a sensor 1-110 in a pixel (*e.g.,* a distance between a bottom surface of a sample well and a photodetection region of a sensor) may be in the range of 10 nanometers and 200 nanometers, or any value or range of values in that range. In some embodiments, a distance between a sample well and a sensor in a pixel may be less than approximately 10 micrometers. In some embodiments, a distance between a sample well and a sensor in a pixel may be less than approximately 7 micrometers. In some embodiments, a distance between a sample well and a sensor in a pixel may be less than approximately 3 micrometers. Examples of suitable sensors are described in U.S. Pat. Application 14/821,656 titled "INTEGRATED DEVICE FOR TEMPORAL BINNING OF RECEIVED PHOTONS". Although FIG. 1-2A illustrates excitation energy coupling to each sample well in a row of pixels, in some embodiments, excitation energy may not couple to all of the pixels in a row. In some embodiments, excitation energy may couple to a portion of pixels or sample wells in a row of pixels of the integrated device.

Coupling region 1-201 may include one or more optical components configured to couple excitation energy from external excitation source 1-106. Coupling region 1-201 may include grating coupler 1-216 positioned to receive some or all of a beam of excitation energy from excitation source 1-106. The beam of excitation energy may have any suitable shape and/or size. In some embodiments, a cross-section of the excitation energy beam may have an elliptical shape. In other embodiments, a cross-section of the excitation energy beam may have a circular shape.

Grating coupler 1-216 may be positioned to receive excitation energy from excitation source 1-106. Grating coupler 1-216 may be formed from one or more materials. In some embodiments, grating coupler 1-216 may include alternating regions of different materials along a direction parallel to propagation of light in the waveguide. Grating coupler 1-216 may include structures formed from one material surrounded by a material having a larger index of refraction. As an example, a grating coupler may include structures formed of silicon nitride and surrounded by silicon dioxide. Any suitable dimensions and/or inter-grating spacing may be used to form grating coupler 1-216. Spacing between structures of grating coupler 1-216 along a direction parallel to light propagation in waveguide 1-220, such as along the z-direction as shown in FIG. 1-2A, may have any suitable distance. The inter-spacing grating may be in the range of approximately 300 nm to approximately 500 nm, or any value or range of values within that range. In some embodiments, the inter-grating spacing may be variable within a grating coupler. Grating coupler 1-216 may have one or more dimensions substantially parallel to surface 1-215 in coupling region 1-201 of integrated device 1-102 that provide a suitable area for coupling with external excitation source 1-106. The area of grating coupler 1-216 may coincide with one or more dimensions of cross-sectional area of a beam of excitation energy from excitation source 1-214 such that the beam overlaps with grating coupler 1-216.

Grating coupler 1-216 may couple excitation energy received from excitation source 1-214 to waveguide 1-220. Waveguide 1-220 is configured to propagate excitation energy to the proximity of one or more sample wells 1-108. In some embodiments, grating coupler 1-216 and waveguide 1-220 are formed in substantially the same plane of integrated device 1-102. In some embodiments, grating coupler 1-216 and waveguide 1-220 are formed from the same layer of integrated device 4-200 and may include the same material. In some embodiments, a mirror positioned over grating coupler 1-216 may direct excitation energy from an excitation source towards grating coupler 1-216. The mirror may be integrated into part of a housing positioned over the surface of the integrated device having the sample wells, where the housing may provide fluid containment for a sample. One or more sensors 1-230 may be positioned to receive excitation energy that passes through grating coupler 1-216 and/or passes through a region proximate to grating coupler 1-216, such as a region in the plane of grating coupler 1-216 outside of grating coupler 1-216.

In some embodiments, one or more filters may be positioned between waveguide 1-220 and sensors 1-110. The one or more filters may be configured to reduce or prevent excitation energy from passing towards sensors 1-110, which may contribute to signal noise of the sensors 1-110.

Coupling region may include reflective layer 1-226 positioned to receive excitation energy that may pass through grating coupler 1-216 (as shown by dashed lines in FIG. 1-2A). Reflective layer is positioned proximate to the side of grating coupler 1-216 opposite an incident beam of excitation energy from excitation source 1-106. Reflective layer 1-226 may improve coupling efficiency of excitation energy into grating coupler 1-216 and/or into waveguide 1-220 by reflecting excitation energy back towards the grating coupler (as shown by dashed line in FIG. 1-2A). Reflective layer 1-226 may include Al, AlCu, TiN, or any other suitable material reflective one or more excitation energies. In some embodiments, reflective layer 1-226 may include one or more openings that allow excitation energy to pass to one or more sensors 1-230. One or more sensors 1-230 positioned to receive excitation energy that passes through one or more openings of reflective layer 1-226 may generate signals used to align a beam of excitation energy from excitation source 1-106 to integrated device 1-102. In particular, signals from one or more sensors 1-230 of coupling region 1-201 may provide an indication of alignment of a beam of excitation energy to grating coupler 1-216. The indication of alignment may be used to control one or more components located off of integrated device 1-102 to position and/or align a beam of excitation energy to integrated device 1-102.

Components located off of the integrated device may be used to position and align the excitation source 1-106 to the integrated device. Such components may include optical components including lenses, mirrors, prisms, apertures, attenuators, and/or optical fibers. Additional mechanical components may be included in the instrument to allow for control of one or more alignment components. Such mechanical components may include actuators, stepper motors, and/or knobs. Examples of suitable excitation sources and alignment mechanisms are described in U.S. Pat. Application 62/310,398 titled "PULSED LASER AND SYSTEM". Another example of a beam-steering module is described in U.S. Pat. Application 62/435,679 titled "COMPACT BEAM SHAPING AND STEERING ASSEMBLY".

Optical dump region 1-204 of integrated device 1-102 may include one or more components 1-240 at an end of waveguide 1-220 opposite to coupling region 1-201. Component(s) 1-240 may act to direct remaining excitation energy propagating through waveguide 1-220 after coupling with sample wells 1-110 out of waveguide 1-220. Component(s) 1-240 may improve performance of the integrated device by directing the remaining excitation energy away from the pixel region 1-203 of integrated device 1-102. Component(s) 1-240 may include grating coupler(s), optical coupler(s), taper(s), hairpin(s), undulator(s), or any other suitable optical components. In some embodiments, optical dump region 1-204 includes one or more sensors 1-242 positioned to receive excitation energy coupled out of waveguide 1-220. Signals from the one or more sensors 1-242 may provide an indication of optical power of the excitation energy propagating through waveguide 1-220, and in some embodiments, may be used to control optical power of an excitation energy beam generated by excitation source 1-106. In this manner, one or more sensors 1-242 may act as monitoring sensor(s). In some embodiments, optical bump region 1-204 may include component 1-240 and sensor 1-242 for each waveguide of integrated device 1-102.

A sample to be analyzed may be introduced into sample well 1-108 of pixel 1-112. The sample may be a biological sample or any other suitable sample, such as a chemical sample. The sample may include multiple molecules and the sample well may be configured to isolate a single molecule. In some instances, the dimensions of the sample well may act to confine a single molecule within the sample well, allowing measurements to be performed on the single molecule. An excitation source 1-106 may be configured to deliver excitation energy into the sample well 1-108, so as to excite the sample or at least one luminescent marker attached to the sample or otherwise associated with the sample while it is within an illumination area within the sample well 1-108.

When an excitation source delivers excitation energy to a sample well, at least one sample within the well may luminesce, and the resulting emission may be detected by a sensor. As used herein, the phrases "a sample may luminesce" or "a sample may emit radiation" or "emission from a sample" mean that a luminescent tag, marker, or reporter, the sample itself, or a reaction product associated with the sample may produce the emitted radiation.

One or more components of an integrated device may direct emission energy towards a sensor. The emission energy or energies may be detected by the sensor and converted to at least one electrical signal. The electrical signals may be transmitted along conducting lines in the circuitry of the integrated device connected to the instrument through the integrated device interface. The electrical signals may be subsequently processed and/or analyzed. Processing or analyzing of electrical signals may occur on a suitable computing device either located on or off the instrument.

In operation, parallel analyses of samples within the sample wells are carried out by exciting some or all of the samples within the wells using the excitation source and detecting signals from sample emission with the sensors. Emission energy from a sample may be detected by a corresponding sensor and converted to at least one electrical signal. The resulting signal, or signals, may be processed on the integrated device in some embodiments, or transmitted to the instrument for processing by the processing device and/or computing device. Signals from a sample well may be received and processed independently from signals associated with the other pixels.

In some embodiments, a sample may be labeled with one or more markers, and emission associated with the markers is discernable by the instrument. For example the sensor may be configured to convert photons from the emission energy into electrons to form an electrical signal that may be used to discern a lifetime that is dependent on the emission energy from a specific marker. By using markers with different lifetimes to label samples, specific samples may be identified based on the resulting electrical signal detected by the sensor.

A sample may contain multiple types of molecules and different luminescent markers may uniquely associate with a molecule type. During or after excitation, the luminescent marker may emit emission energy. One or more properties of the emission energy may be used to identify one or more types of molecules in the sample. Properties of the emission energy used to distinguish among types of molecules may include a fluorescence lifetime value, intensity, and/or emission wavelength. A sensor may detect photons, including photons of emission energy, and provide electrical signals indicative of one or more of these properties. In some embodiments, electrical signals from a sensor may provide information about a distribution of photon arrival times across one or more time intervals. The distribution of photon arrival times may correspond to when a photon is detected after a pulse of excitation energy is emitted by an excitation source. A value for a time interval may correspond to a number of photons detected during the time interval. Relative values across multiple time intervals may provide an indication of a temporal characteristic of the emission energy (*e.g.,* lifetime). Analyzing a sample may include distinguishing among markers by comparing values for two or more different time intervals within a distribution. In some embodiments, an indication of the intensity may be provided by determining a number of photons across all time bins in a distribution.

An exemplary instrument 1-104 may comprise one or more mode-locked laser modules 1-258 mounted as a replaceable module within, or otherwise coupled to, the instrument, as depicted in FIG. 1-2B. The instrument 1-104 may include an optical system 1-255 and an analytic system 1-260. The optical system 1-255 may include some combination of optical components (which may include, for example, none, one, or more of each of: lens, mirror, optical filter, attenuator, beam-steering component, beam shaping component) and be configured to operate on and/or deliver output optical pulses 1-252 from a mode-locked laser module 1-258 to the analytic system 1-260. The analytic system may include a plurality of components 1-140 that are arranged to direct the optical pulses to at least one sample that is to be analyzed, receive one or more optical signals (e.g., fluorescence, backscattered radiation) from the at least one sample, and produce one or more electrical signals representative of the received optical signals. In some embodiments, the analytic system 1-260 may include one or more photodetectors and signal-processing electronics (e.g., one or more microcontrollers, one or more field-programmable gate arrays, one or more microprocessors, one or more digital signal processors, logic gates, etc.) configured to process the electrical signals from the photodetectors. The analytic system 1-260 may also include data transmission hardware configured to transmit and receive data to and from external devices via one or more data communications links. In some embodiments, the analytic system 1-260 may be configured to receive integrated device 1-102, which may receive one or more samples to be analyzed.

FIG. 1-2C depicts temporal intensity profiles of the output pulses 1-252. In some embodiments, the peak intensity values of the emitted pulses may be approximately equal, and the profiles may have a Gaussian temporal profile, though other profiles such as a sech² profile may be possible. In some cases, the pulses may not have symmetric temporal profiles and may have other temporal shapes. The duration of each pulse may be characterized by a full-width-half-maximum (FWHM) value, as indicated in FIG. 1-2. According to some embodiments of a mode-locked laser, ultrashort optical pulses may have FWHM values less than 100 picoseconds (ps). In some cases, the FWHM values may be between approximately 5 ps and approximately 30 ps.

The output pulses 1-252 may be separated by regular intervals *T.* For example, *T* may be determined by a round-trip travel time between an output coupler and a cavity end mirror of laser module 1-258. According to some embodiments, the pulse-separation interval *T* may be in the range of approximately 1 ns to approximately 30 ns, or any value or range of values within that range. In some cases, the pulse-separation interval *T* may be in the range of approximately 5 ns to approximately 20 ns, corresponding to a laser-cavity length (an approximate length of an optical axis within a laser cavity of laser module 1-258) between about 0.7 meter and about 3 meters.

According to some embodiments, a desired pulse-separation interval *T* and laser-cavity length may be determined by a combination of the number of sample wells on integrated device 1-102, fluorescent emission characteristics, and the speed of data-handling circuitry for reading data from integrated device 1-102. The inventors have recognized and appreciated that different fluorophores may be distinguished by their different fluorescent decay rates or characteristic lifetimes. Accordingly, there needs to be a sufficient pulse-separation interval *T* to collect adequate statistics for the selected fluorophores to distinguish between their different decay rates. Additionally, if the pulse-separation interval *T* is too short, the data handling circuitry cannot keep up with the large amount of data being collected by the large number of sample wells. The inventors have recognized and appreciated that a pulse-separation interval *T* between about 5 ns and about 20 ns is suitable for fluorophores that have decay rates up to about 2 ns and for handling data from between about 60,000 and 600,000 sample wells.

According to some implementations, a beam-steering module may receive output pulses from the mode-locked laser module 1-125 and be configured to adjust at least the position and incident angles of the optical pulses onto an optical coupler of the integrated device 1-102. In some cases, the output pulses from the mode-locked laser module may be operated on by a beam-steering module to additionally or alternatively change a beam shape and/or beam rotation at an optical coupler on the integrated device 1-102. In some implementations, the beam-steering module may further provide focusing and/or polarization adjustments of the beam of output pulses onto the optical coupler. One example of a beam-steering module is described in U.S. patent application 15/161,088 titled "PULSED LASER AND BIOANALYTIC SYSTEM," filed May 20, 2016. Another example of a beam-steering module is described in U.S. Pat. Application 62/435,679 titled "COMPACT BEAM SHAPING AND STEERING ASSEMBLY".

Referring to FIG. 1-3, the output pulses 1-522 from a mode-locked laser module may be coupled into one or more optical waveguides 1-312 on the integrated device. In some embodiments, the optical pulses may be coupled to one or more waveguides via a grating coupler 1-310, though coupling to an end of one or more optical waveguides on the integrated device may be used in some embodiments. According to some embodiments, a quad detector 1-320 may be located on a semiconductor substrate 1-305 (*e.g.,* a silicon substrate) for aiding in alignment of the beam of optical pulses 1-122 to a grating coupler 1-310. The one or more waveguides 1-312 and sample wells 1-330 may be integrated on the same semiconductor substrate with intervening dielectric layers (*e.g.,* silicon dioxide layers) between the substrate, waveguide, sample wells, and photodetectors 1-322.

Each waveguide 1-312 may include a tapered portion 1-315 below the sample wells 1-330 to equalize optical power coupled to the sample wells along the waveguide. The reducing taper may force more optical energy outside the waveguide's core, increasing coupling to the sample wells and compensating for optical losses along the waveguide, including losses for light coupling into the sample wells. A second grating coupler 1-317 may be located at an end of each waveguide to direct optical energy to an integrated photodiode 1-324. The integrated photodiode may detect an amount of power coupled down a waveguide and provide a detected signal to feedback circuitry that controls a beam-steering module.

The sample wells 1-330 may be aligned with the tapered portion 1-315 of the waveguide and recessed in a tub 1-340. There may be time-binning photodetectors 1-322 located on the semiconductor substrate 1-305 for each sample well 1-330. A metal coating and/or multilayer coating 1-350 may be formed around the sample wells and above the waveguide to prevent optical excitation of fluorophores that are not in the sample well (*e.g.,* dispersed in a solution above the sample wells). The metal coating and/or multilayer coating 1-350 may be raised beyond edges of the tub 1-340 to reduce absorptive losses of the optical energy in the waveguide 1-312 at the input and output ends of each waveguide.

There may be a plurality of rows of waveguides, sample wells, and time-binning photodetectors on the integrated device. For example, there may be 128 rows, each having 512 sample wells, for a total of 65,536 sample wells in some implementations. Other implementations may include fewer or more sample wells, and may include other layout configurations. Optical power from a mode-locked laser may be distributed to the multiple waveguides via one or more star couplers and/or multi-mode interference couplers, or by any other means, located between an optical coupler of the integrated device and the plurality of waveguides.

FIG. 1-4 illustrates optical energy coupling from an optical pulse 1-122 within a waveguide 1-315 to a sample well 1-330. Waveguide 1-315 may be considered as a channel waveguide. The drawing has been produced from an electromagnetic field simulation of the optical wave that accounts for waveguide dimensions, sample well dimensions, the different materials' optical properties, and the distance of the waveguide 1-315 from the sample well 1-330. The waveguide may be formed from silicon nitride in a surrounding medium 1-410 of silicon dioxide, for example. The waveguide, surrounding medium, and sample well may be formed by microfabrication processes described in U.S. Patent Application No. 14/821,688, filed August 7, 2015, titled "INTEGRATED DEVICE FOR PROBING, DETECTING AND ANALYZING MOLECULES." According to some embodiments, an evanescent optical field 1-420 couples optical energy transported by the waveguide to the sample well 1-330.

A non-limiting example of a biological reaction taking place in a sample well 1-330 is depicted in FIG. 1-5. In this example, sequential incorporation of nucleotides and/or nucleotide analogs into a growing strand that is complementary to a target nucleic acid is taking place in the sample well. The sequential incorporation can be detected to sequence a series of nucleic acids (*e.g.,* DNA, RNA). The sample well may have a depth in the range of approximately 150 to approximately 250 nm, or any value or range of values within that range, and a diameter in the range of approximately 80 nm to approximately 160 nm. A metallization layer 1-540 (*e.g.,* a metallization for an electrical reference potential) may be patterned above the photodetector to provide an aperture that blocks stray light from adjacent sample wells and other unwanted light sources. According to some embodiments, polymerase 1-520 may be located within the sample well 1-330 (*e.g.,* attached to a base of the sample well). The polymerase may take up a target nucleic acid (*e.g.,* a portion of nucleic acid derived from DNA), and sequence a growing strand of complementary nucleic acid to produce a growing strand of DNA 1-512. Nucleotides and/or nucleotide analogs labeled with different fluorophores may be dispersed in a solution above and within the sample well.

When a labeled nucleotide and/or nucleotide analog 1-610 is incorporated into a growing strand of complementary nucleic acid, as depicted in FIG. 1-6, one or more attached fluorophores 1-630 may be repeatedly excited by pulses of optical energy coupled into the sample well 1-330 from the waveguide 1-315. In some embodiments, the fluorophore or fluorophores 1-630 may be attached to one or more nucleotides and/or nucleotide analogs 1-610 with any suitable linker 1-620. An incorporation event may last for a period of time up to about 100 ms. During this time, pulses of fluorescent emission resulting from excitation of the fluorophore(s) by pulses from the mode-locked laser may be detected with a time-binning photodetector 1-322. By attaching fluorophores with different emission characteristics (*e.g.,* fluorescent decay rates, intensity, fluorescent wavelength) to the different nucleotides (A,C,G,T), detecting and distinguishing the different emission characteristics while the strand of DNA 1-512 incorporates a nucleic acid and enables determination of the nucleotide sequence of the growing strand of DNA.

According to some embodiments, an instrument 1-104 that is configured to analyze samples based on fluorescent emission characteristics may detect differences in fluorescent lifetimes and/or intensities between different fluorescent molecules, and/or differences between lifetimes and/or intensities of the same fluorescent molecules in different environments. By way of explanation, FIG. 1-7 plots two different fluorescent emission probability curves (A and B), which may be representative of fluorescent emission from two different fluorescent molecules, for example. With reference to curve A (dashed line), after being excited by a short or ultrashort optical pulse, a probability *p_{A}(t)* of a fluorescent emission from a first molecule may decay with time, as depicted. In some cases, the decrease in the probability of a photon being emitted over time may be represented by an exponential decay function *p_{A}*(*t*) *= P_{Ao}e*^{*-t*/τ_{A}}, where *P_{Ao}* is an initial emission probability and τ_{A} is a temporal parameter associated with the first fluorescent molecule that characterizes the emission decay probability. τ_{A} may be referred to as the "fluorescence lifetime," "emission lifetime," or "lifetime" of the first fluorescent molecule. In some cases, the value of τ_{A} may be altered by a local environment of the fluorescent molecule. Other fluorescent molecules may have different emission characteristics than that shown in curve A. For example, another fluorescent molecule may have a decay profile that differs from a single exponential decay, and its lifetime may be characterized by a half-life value or some other metric.

A second fluorescent molecule may have a decay profile that is exponential, but has a measurably different lifetime τ_{B}, as depicted for curve B in FIG. 1-7. In the example shown, the lifetime for the second fluorescent molecule of curve B is shorter than the lifetime for curve A, and the probability of emission is higher sooner after excitation of the second molecule than for curve A. Different fluorescent molecules may have lifetimes or half-life values ranging from about 0.1 ns to about 20 ns, in some embodiments.

The inventors have recognized and appreciated that differences in fluorescent emission lifetimes can be used to discern between the presence or absence of different fluorescent molecules and/or to discern between different environments or conditions to which a fluorescent molecule is subjected. In some cases, discerning fluorescent molecules based on lifetime (rather than emission wavelength, for example) can simplify aspects of an l instrument 1-104. As an example, wavelength-discriminating optics (such as wavelength filters, dedicated detectors for each wavelength, dedicated pulsed optical sources at different wavelengths, and/or diffractive optics) may be reduced in number or eliminated when discerning fluorescent molecules based on lifetime. In some cases, a single pulsed optical source operating at a single characteristic wavelength may be used to excite different fluorescent molecules that emit within a same wavelength region of the optical spectrum but have measurably different lifetimes. An analytic system that uses a single pulsed optical source, rather than multiple sources operating at different wavelengths, to excite and discern different fluorescent molecules emitting in a same wavelength region can be less complex to operate and maintain, more compact, and may be manufactured at lower cost.

Although analytic systems based on fluorescent lifetime analysis may have certain benefits, the amount of information obtained by an analytic system and/or detection accuracy may be increased by allowing for additional detection techniques. For example, some analytic systems 2-160 may additionally be configured to discern one or more properties of a sample based on fluorescent wavelength and/or fluorescent intensity.

Referring again to FIG. 1-7, according to some embodiments, different fluorescent lifetimes may be distinguished with a photodetector that is configured to time-bin fluorescent emission events following excitation of a fluorescent molecule. The time binning may occur during a single charge-accumulation cycle for the photodetector. A charge-accumulation cycle is an interval between read-out events during which photo-generated carriers are accumulated in bins of the time-binning photodetector. The concept of determining fluorescent lifetime by time-binning of emission events is introduced graphically in FIG. 1-8. At time tₑ just prior to t₁, a fluorescent molecule or ensemble of fluorescent molecules of a same type (*e.g.,* the type corresponding to curve B of FIG. 1-7) is (are) excited by a short or ultrashort optical pulse. For a large ensemble of molecules, the intensity of emission may have a time profile similar to curve B, as depicted in FIG. 1-8.

For a single molecule or a small number of molecules, however, the emission of fluorescent photons occurs according to the statistics of curve B in FIG. 1-7, for this example. A time-binning photodetector 1-322 may accumulate carriers generated from emission events into discrete time bins (three indicated in FIG. 1-8) that are temporally resolved with respect to the excitation time of the fluorescent molecule(s). When a large number of emission events are summed, carriers accumulated in the time bins may approximate the decaying intensity curve shown in FIG. 1-8, and the binned signals can be used to distinguish between different fluorescent molecules or different environments in which a fluorescent molecule is located.

Examples of a time-binning photodetector 1-322 are described in U.S. Patent application No. 14/821,656, filed August 7, 2015, titled "INTEGRATED DEVICE FOR TEMPORAL BINNING OF RECEIVED PHOTONS". For explanation purposes, a non-limiting embodiment of a time-binning photodetector is depicted in FIG. 1-9. A single time-binning photodetector 1-900 may comprise a photon-absorption/carrier-generation region 1-902, a carrier-travel region 1-906, and a plurality of carrier-storage bins 1-908a, 1-908b, 1-908c all formed on a semiconductor substrate. The carrier-travel region may be connected to the plurality of carrier-storage bins by carrier-transport channels 1-907. Only three carrier-storage bins are shown, but there may be more or less. In some embodiments, a single time-binning photodetector 1-900 includes at least two carrier-storage bins. There may be a read-out channel 1-910 connected to the carrier-storage bins. The photon-absorption/carrier-generation region 1-902, carrier-travel region 1-906, carrier-storage bins 1-908a, 1-908b, 1-908c, and read-out channel 1-910 may be formed by doping the semiconductor locally and/or forming adjacent insulating regions to provide photodetection capability and confine carriers. A time-binning photodetector 1-900 may also include a plurality of electrodes 1-920, 1-922, 1-932, 1-934, 1-936, 1-940 formed on the substrate that are configured to generate electric fields in the device for transporting carriers through the device.

In operation, fluorescent photons may be received at the photon-absorption/carrier-generation region 1-902 at different times and generate carriers. For example, at approximately time t₁ three fluorescent photons may generate three carrier electrons in a depletion region of the photon-absorption/carrier-generation region 1-902. An electric field in the device (due to doping and/or an externally applied bias to electrodes 1-920 and 1-922, and optionally or alternatively to 1-932, 1-934, 1-936) may move the carriers to the carrier-travel region 1-906. In the carrier-travel region, distance of travel translates to a time after excitation of the fluorescent molecules. At a later time t₅, another fluorescent photon may be received in the photon-absorption/carrier-generation region 1-902 and generate an additional carrier. At this time, the first three carriers have traveled to a position in the carrier-travel region 1-906 adjacent to the second storage bin 1-908b. At a later time t₇, an electrical bias may be applied between electrodes 1-932, 1-934, 1-936 and electrode 1-940 to laterally transport carriers from the carrier-travel region 1-906 to the storage bins. The first three carriers may then be transported to and retained in the first bin 1-908a and the later-generated carrier may be transported to and retained in the third bin 1-908c. In some implementations, the time intervals corresponding to each storage bin are at the sub-nanosecond time scale, though longer time scales may be used in some embodiments (*e.g.,* in embodiments where fluorophores have longer decay times).

The process of generating and time-binning carriers after an excitation event (*e.g.,* excitation pulse from a pulsed optical source) may occur once after a single excitation pulse or be repeated multiple times after multiple excitation pulses during a single charge-accumulation cycle for the photodetector 1-900. After charge accumulation is complete, carriers may be read out of the storage bins via the read-out channel 1-910. For example, an appropriate biasing sequence may be applied to at least electrode 1-940 and a downstream electrode (not shown) to remove carriers from the storage bins 1-908a, 1-908b, 1-908c.

After a number of excitation events, the accumulated signal in each electron-storage bin may be read out to provide a histogram having corresponding bins that represent the fluorescent emission decay rate, for example. Such a process is illustrated in FIG. 1-10A and FIG. 1-10B. The histogram's bins may indicate a number of photons detected during each time interval after excitation of the fluorophore(s) in a sample well. In some embodiments, signals for the bins will be accumulated following a large number of excitation pulses, as depicted in FIG. 1-10A. The excitation pulses may occur at times tₑ₁, tₑ₂, tₑ₃, ... t_{eN} which are separated by the pulse interval time *T*. There may be between 10⁵ and 10⁷ excitation pulses applied to the sample well during an accumulation of signals in the electron-storage bins. In some embodiments, one bin (bin 0) may be configured to detect an amplitude of excitation energy delivered with each optical pulse, and be used as a reference signal (*e.g.,* to normalize data).

**In** some implementations, only a single photon on average may be emitted from a fluorophore following an excitation event, as depicted in FIG. 1-10A. After a first excitation event at time tₑ₁, the emitted photon at time t_{f1} may occur within a first time interval, so that the resulting electron signal is accumulated in the first electron-storage bin (contributes to bin 1). In a subsequent excitation event at time tₑ₂, the emitted photon at time t_{f2} may occur within a second time interval, so that the resulting electron signal contributes to bin 2.

After a large number of excitation events and signal accumulations, the electron-storage bins of the time-binning photodetector 1-322 may be read out to provide a multi-valued signal (*e.g.,* a histogram of two or more values, an N-dimensional vector, *etc*.) for a sample well. The signal values for each bin may depend upon the decay rate of the fluorophore. For example and referring again to FIG. 1-8, a fluorophore having a decay curve B will have a higher ratio of signal in bin 1 to bin 2 than a fluorophore having a decay curve A. The values from the bins may be analyzed and compared against calibration values, and/or each other, to determine the particular fluorophore, which in turn identifies the nucleotide or nucleotide analog (or any other molecule or specimen of interest) linked to the fluorophore when in the sample well.

To further aid in understanding the signal analysis, the accumulated, multi-bin values may be plotted as a histogram, as depicted in FIG. 1-10B for example, or may be recorded as a vector or location in N-dimensional space. Calibration runs may be performed separately to acquire calibration values for the multi-valued signals (*e.g.,* calibration histograms) for four different fluorophores linked to the four nucleotides or nucleotide analogs. As an example, the calibration histograms may appear as depicted in FIG. 1-11A (fluorescent label associated with the T nucleotide), FIG. 1-11B (fluorescent label associated with the A nucleotide), FIG. 1-11C (fluorescent label associated with the C nucleotide), and FIG. 1-11D (fluorescent label associated with the G nucleotide). A comparison of the measured multi-valued signal (corresponding to the histogram of FIG. 1-10B) to the calibration multi-valued signals may determine the identity "T" (FIG. 1-11A) of the nucleotide or nucleotide analog being incorporated into the growing strand of DNA.

In some implementations, fluorescent intensity may be used additionally or alternatively to distinguish between different fluorophores. For example, some fluorophores may emit at significantly different intensities or have a significant difference in their probabilities of excitation (*e.g.,* at least a difference of about 35%) even though their decay rates may be similar. By referencing binned signals (bins 1-3) to measured excitation energy bin 0, it may be possible to distinguish different fluorophores based on intensity levels.

In some embodiments, different numbers of fluorophores of the same type may be linked to different nucleotides or nucleotide analogs, so that the nucleotides may be identified based on fluorophore intensity. For example, two fluorophores may be linked to a first nucleotide (*e.g.,* "C") or nucleotide analog and four or more fluorophores may be linked to a second nucleotide (*e.g.,* "T") or nucleotide analog. Because of the different numbers of fluorophores, there may be different excitation and fluorophore emission probabilities associated with the different nucleotides. For example, there may be more emission events for the "T" nucleotide or nucleotide analog during a signal accumulation interval, so that the apparent intensity of the bins is significantly higher than for the "C" nucleotide or nucleotide analog.

The inventors have recognized and appreciated that distinguishing nucleotides or any other biological or chemical specimens based on fluorophore decay rates and/or fluorophore intensities enables a simplification of the optical excitation and detection systems in an instrument 1-104. For example, optical excitation may be performed with a single-wavelength source (*e.g.,* a source producing one characteristic wavelength rather than multiple sources or a source operating at multiple different characteristic wavelengths). Additionally, wavelength discriminating optics and filters may not be needed in the detection system. Also, a single photodetector may be used for each sample well to detect emission from different fluorophores.

The phrase "characteristic wavelength" or "wavelength" is used to refer to a central or predominant wavelength within a limited bandwidth of radiation (*e.g.,* a central or peak wavelength within a 20 nm bandwidth output by a pulsed optical source). In some cases, "characteristic wavelength" or "wavelength" may be used to refer to a peak wavelength within a total bandwidth of radiation output by a source.

The inventors have recognized and appreciated that fluorophores having emission wavelengths in a range between about 560 nm and about 900 nm can provide adequate amounts of fluorescence to be detected by a time-binning photodetector (which may be fabricated on a silicon wafer using CMOS processes). These fluorophores can be linked to biological molecules of interest such as nucleotides or nucleotide analogs. Fluorescent emission in this wavelength range may be detected with higher responsivity in a silicon-based photodetector than fluorescence at longer wavelengths. Additionally, fluorophores and associated linkers in this wavelength range may not interfere with incorporation of the nucleotides or nucleotide analogs into growing strands of DNA. The inventors have also recognized and appreciated that fluorophores having emission wavelengths in a range between about 560 nm and about 660 nm may be optically excited with a single-wavelength source. An example fluorophore in this range is Alexa Fluor 647, available from Thermo Fisher Scientific Inc. of Waltham, Massachusetts. The inventors have also recognized and appreciated that excitation energy at shorter wavelengths (*e.g.,* between about 500 nm and about 650 nm) may be required to excite fluorophores that emit at wavelengths between about 560 nm and about 900 nm. In some embodiments, the time-binning photodetectors may efficiently detect longer-wavelength emission from the samples, *e.g*., by incorporating other materials, such as Ge, into the photodetectors active region.

Although the prospect of sequencing DNA using an excitation source that emits a single characteristic wavelength can simplify some of the optical system, it can place technically challenging demands on the excitation source, as noted above. For example, the inventors have recognized and appreciated that optical pulses from the excitation source should extinguish quickly for the detection schemes described above, so that the excitation energy does not overwhelm or interfere with the subsequently detected fluorescent signal. In some embodiments and referring again to FIG. 1-5, there may be no wavelength filters between the waveguide 1-315 and the time-binning photodetector 1-322. To avoid interference of the excitation energy with subsequent signal collection, the excitation pulse may need to reduce in intensity by at least 50 dB within about 100 ps from the peak of the excitation pulse. In some implementations, the excitation pulse may need to reduce in intensity by at least 80 dB within about 100 ps from the peak of the excitation pulse. The inventors have recognized and appreciated that mode-locked lasers can provide such rapid turn-off characteristics. However, mode-locked lasers can be difficult to operate in a stable mode-locking state for extended periods of time. Also, because the pulse repetition rate may need to be lower than 100 MHz for data acquisition purposes, the length of a mode-locked laser cavity can become very long. Such long lengths are contrary to a compact optical source that can be incorporated into a portable, desk-top instrument. Additionally, a mode-locked laser must provide adequate energy per pulse (or high average powers) for excitation of fluorophores at wavelengths below 660 nm, so that fluorescence is detectable with integrated photodiodes for thousands or even millions of sample wells in parallel. The inventors have further recognized and appreciated that a beam quality of the mode-locked laser should be high (*e.g.,* an M² value less than 1.5), so that efficient coupling can be achieved to an optical coupler and waveguides of an integrated device 1-102, for example. Currently, there is no commercial mode-locked lasing system available that provides pulses at repetition rates between 50 MHz and 200 MHz, at wavelengths between 500 nm and 650 nm, at average powers between 250 mW and 1 W, in a compact module (*e.g.,* occupying a volume of less than 0.1 ft³) that could be incorporated into a portable, desk-top instrument and remain stable for extended periods of time.

### III. Integrated Device

Performance of an integrated device in analyzing samples can depend on various factors related to optics of the integrated device, including coupling efficiency of an optical coupler (*e.g.,* grating coupler) of the integrated device, optical loss in splitting excitation energy into individual waveguides, and coupling efficiency of individual waveguides into sample wells. These factors may become exaggerated as more sample wells and optical components are included on the integrated device to deliver excitation energy to the sample wells. Aspects of the present application relate to optical couplers, optical splitters, waveguides, and techniques for arranging these optical components in an integrated device to reduce optical loss and/or improve coupling efficiency. In addition, the techniques described herein may improve uniformity in the delivery of excitation energy to the sample wells of an integrated device.

Performance of an integrated device in analyzing samples can also depend on the amount of excitation energy (*e.g.,* optical power) delivered to individual sample wells. As excitation energy propagates from an excitation source to a sample well, optical loss may occur which can reduce the amount of excitation energy that couples to the sample well and may impact the performance of the pixel associated with the sample well in detecting a sample. For an array of sample wells, such optical loss may limit the number of pixels capable of sample detection. Such optical loss may also reduce the uniformity in delivering excitation energy to individual sample wells in the array, which may also impact the performance of the integrated device. A waveguide of the integrated device may couple excitation energy to a number of sample wells (*e.g*., 512 sample wells) positioned proximate to the waveguide. As excitation energy propagates along the waveguide, the amount of total optical loss may increase, reducing the amount of excitation energy that couples to sample wells positioned further along the waveguide. In this manner, optical loss along the waveguide may impact the uniformity in the amount of excitation energy coupled to individual sample wells positioned along the waveguide. Aspects of the present application relate to integrated devices, and methods of forming integrated devices, that improve uniformity of excitation energy within the array of sample wells by reducing optical loss as excitation energy propagates along a waveguide.

In some cases, problems can arise when trying to couple power from an optical source efficiently to a large plurality of integrated optical waveguides. To provide sufficient power to each waveguide and sample well for a large number of sample wells, the average power in the input beam rises proportionally with the increase in the number of sample wells. For some integrated optical waveguides (*e.g*., a silicon-nitride waveguide core/silicon-dioxide cladding), high powers can cause temporal changes in the transmission loss of the waveguide and therefore cause appreciable power instabilities in the sample wells over time. Time-dependent transmission loss in integrated optical waveguides at high powers has been measured by the inventors, and example results are plotted in FIG. 2-0.

Insertion loss was measured as a function of time for three identical lengths of single-mode waveguides having a silicon-nitride core. The initial average power levels coupled into the three waveguides was 0.5 mW, 1 mW, and 2 mW. The plot of FIG. 2-0 shows the change in measured insertion loss for each length of waveguide as a function of time for the three power levels. The plot shows that at high power levels the loss can change by 3 dB in less than ten minutes. For some applications, such as single-molecule nucleic acid sequencing where reactions may be run for tens of minutes or hours, such power instabilities may not be acceptable.

In cases where emission intensities from the sample wells are low or where characterization of a sample depends upon intensity values from the sample wells, it is beneficial that the power delivered to the sample wells remains stable over time. For example, if the power delivered to the sample wells decreases by 3 dB (see FIG. 2-0) due to time-dependent transmission loss in the waveguides, then the number of fluorescent emission events may fall to a level that is below a noise floor of the instrument. In some cases, failure to distinguish photon signals from noise can adversely affect photon statistics used to distinguish fluorophore lifetimes. As a result, important analytic information can be lost, errors in analysis may occur (e.g., errors in nucleic acid sequence detection), or a sequencing run may fail.

One approach to reducing the effects of time-dependent waveguide transmission loss is to reduce the length of integrated waveguides used in an integrated device. In some cases, appreciable lengths of waveguides may be needed to route excitation energy to the sample wells. Alternatively or additionally, the intensity of radiation coupled into the waveguides may be reduced and/or the optical loss along a waveguide that arises from a metal layer may be increased. The inventors have recognized and appreciated that the time-dependent waveguide transmission loss may be most problematic where a beam from an excitation source is coupled first into a single waveguide of an integrated optical circuit and then redistributed among many waveguides (*e.g.,* by using a binary tree of multimode interference splitters having one input and two outputs). At the coupling region, in such instances, the intensity may be very high and cause rapid changes in waveguide transmission loss.

Some embodiments of the present application relate to waveguide structures, and methods of forming waveguide structures, that provide an optical mode having a desired evanescent field extending from the waveguide. An evanescent field extending perpendicular to the direction of propagation along the waveguide may have a distribution of optical power that decreases from the waveguide. The evanescent field may have a characteristic decay at which the optical power decreases from the waveguide. A waveguide configured to support propagation of an optical mode may be considered to be a "confined" optical mode when the evanescent field decays quickly from the waveguide.

One or more dimensions of a waveguide may impact a characteristic of the evanescent field, including the decay rate, distance of the evanescent field from an interface between a waveguide material and a surrounding material (*e.g.,* cladding), and optical power profile of the evanescent field in a direction perpendicular from the waveguide propagation direction. A dimension of a waveguide perpendicular to the direction of propagation along the waveguide may impact one or more characteristics of the evanescent field. In some embodiments, a thickness of a waveguide may impact one or more characteristics of an evanescent field. The thickness of the waveguide may impact the decay of the evanescent field of excitation energy propagating along the waveguide. In some embodiments, increasing the thickness of the waveguide may increase the decay of the evanescent field.

Some embodiments relate to waveguide structures that have a variable thickness to provide a desired evanescent field for coupling to one or more sample wells of an integrated device. In some embodiments, the thickness of the waveguide may be larger in a region that overlaps with one or more sample wells than in a region that is non-overlapping with the one or more sample wells. In such embodiments, the waveguide may provide an optical mode having an evanescent field that provides a desired amount of coupling of excitation energy into a sample well while reducing optical loss from the presence of a metal layer.

Another technique for reducing optical loss and improving optical performance of an integrated device may include varying the power distribution of excitation energy along the length of a waveguide of the integrated device. The power distribution may increase and/or broaden at locations along the waveguide that overlap with a sample well and decrease and/or narrow at locations along the waveguide that do not overlap with a sample well. In some embodiments, a waveguide of an integrated device may propagate a plurality of optical modes. Such a waveguide may be considered a "multimode waveguide." The plurality of optical modes may interfere to vary the power distribution of excitation energy in a direction perpendicular to the direction of light propagation along the waveguide. The power distribution of the multimode waveguide may vary such that the power distribution broadens at one or more positions along the waveguide that overlap with a sample well.

### A. Grating Coupler

To reduce time-dependent waveguide loss at coupling region 1-201, a sliced grating coupler 2-100, of which a simplified illustration is shown in FIG. 2-1A, may be implemented. The sliced grating coupler may be grating coupler 1-216 (*e.g.,* FIG. 1-2A), and comprise a grating 2-110 of length L formed adjacent to a plurality of waveguides 2-120, which may be considered as output waveguides. The waveguides may have tapered ends 2-122 that receive light diffracted by the grating 2-110. The tapered ends may have different widths (e.g., wider widths towards opposing ends of the grating, as depicted). The total width spanned by the tapered ends may be less than or approximately equal to the length L of the grating.

In some embodiments, a beam from the excitation source 1-106 may be expanded (or produced by the excitation source) so that it extends in the Y direction to essentially match the length L of the grating. For example, the extended beam 2-112 may have a shape as depicted by the dashed ellipse in FIG. 2-1A, where the dashed ellipse corresponds to a portion of the beam having optical intensity above a desired threshold (*e.g.,* 80%, 90%). An incident beam may have tail regions of low optical intensity that extend beyond the dashed ellipse shown in FIG. 2-1A. Sliced grating coupler 2-100 may be configured to capture a fraction of an incident beam in the range of 75% to 99%, or any percentage or range of percentages in that range. When such a beam is incident on the grating (e.g., travelling primarily in the +Z direction), the grating will diffract the beam in the X direction towards the tapered ends 2-122 of the waveguides 2-120. In some embodiments, the beam may be incident to the grating at an angle of a few degrees (*e.g*., 1-6 degrees) from normal (+Z direction) to the grating 2-110. Positioning the incident beam at an angle towards the output waveguides 2-120 may improve excitation energy coupling efficiency into the grating coupler by reducing the amount of diffraction in the grating coupler than if the beam was normal to the grating coupler. The beam may have a transverse intensity profile in the Y-direction that is most intense at its center and reduces in intensity moving toward the edges of the beam (reducing in the ± Y directions). For such a beam, the tapered ends 2-122 of the waveguides may be wider at the opposing ends of the grating 2-110 and narrower at the center of the grating, so that similar amounts of power are coupled into each waveguide of the plurality of waveguides 2-120. Although 10 waveguides are shown in the drawing, a sliced grating coupler may have many more waveguides. In some embodiments, a sliced grating coupler may have a number of output waveguides in the range between 20 and 200, or any value or any range of values in that range. By distributing the coupling of power across many waveguides, adverse effects associated with time-dependent transmission loss from initially coupling all the power into a single waveguide can be reduced or eliminated. An expanded beam also reduces the intensity at the grating coupler and reduces the risk of damaging the grating 2-110, the reflective layer 1-226, other structures in the integrated device, and other structures in the optical system.

In some instances, it is desirable to provide for adjustable uniformity of coupling of power into the plurality of waveguides 2-120 with the sliced grating coupler 2-100 and beam arrangement depicted in FIG. 2-1A. Even though the transverse intensity profile of the beam may be Gaussian or well-characterized so that the different widths of the tapered ends 2-122 can be computed beforehand to theoretically capture equal amounts of power, the uniformity of coupling can be highly sensitive to changes in the beam's transverse intensity profile and to beam displacement in the Y direction.

FIG. 2-1B illustrates an approach to coupling a wide beam to a plurality of waveguides that provides adjustments for improving uniformity of power levels coupled to the waveguides, reduces the sensitivity of coupling to the beam's transverse intensity profile and to beam displacement. According to some embodiments, a round-shaped beam from an excitation source (*e.g.,* a laser) may be reshaped into an elliptical beam 2-122 that exceeds the length L of the grating 2-110 and array of tapered ends 2-122 and is rotated such that a major axis of the ellipse is at an angle α with respect to the teeth or lines of the grating 2-110. The angle α may be between 1 degree and 10 degrees in some embodiments. Portions of the beam 2-122 may extend beyond edges of the grating 2-110 in the ± X directions. Whereas the coupling arrangement shown in FIG. 2-1A may allow power from more than 95% of the beam area to couple into the tapered ends 2-122, the coupling arrangement shown in FIG. 2-1B may allow power from between 80% and 95% of the beam area to couple into the tapered ends. The inventors have recognized and appreciated that a reduction in overall coupling efficiency is more than compensated by improvements in coupling stability and uniformity of coupled power into the waveguides. FIG. 2-1C shows percentage discarded across an integrated device by using a sliced grating coupler for different beam widths to demonstrate the ability of the grating coupler to tolerate different beam sizes while maintaining a desired performance of the integrated device. In some embodiments, a sliced grating coupler may allow for a beam size tolerance of approximately +/- 10%, grating coupler efficiency of approximately 45%, and variation of uniformity of illumination across the array of sample wells of approximately +/- 25%.

During operation, the angle α and the beam displacement in the X and Y directions may be adjusted to obtain and maintain uniform coupling of power across the plurality of waveguides 2-120. If a beam 2-122 has an asymmetric intensity profile in the Y direction, then the position of the beam may be adjusted in the X direction to compensate for the asymmetry. For example, if the intensity of the beam in the +Y direction is greater than the intensity of the beam in the -Y direction, then the beam may be moved in the -X direction (for the angle shown) so that a portion of the beam in the +Y direction moves off the grating 2-110 and reduces the amount of power coupled to the tapered ends 2-122 in the +Y direction. A portion of the beam in the -Y direction may move onto the grating 2-110 and increase the amount of power coupled to the tapered ends 2-122 in the -Y direction. If a beam 2-122 has a symmetric intensity profile in the Y direction, then adjustments in the ± Y directions and/or ± α directions can be made to improve uniformity of power coupled into the waveguides. An example of a beam-steering module used to align an elliptical beam to a sliced grating coupler is described in U.S. Pat. Application 62/435,679 titled "COMPACT BEAM SHAPING AND STEERING ASSEMBLY".

One or more dimensions of the tapered ends of a sliced grating coupler may vary to compensate for variation in optical intensity coupled to the sliced grating coupler. In some embodiments, the width (along the y-axis shown in FIG. 2-1A) of the tapered ends may vary at a side of the sliced grating coupler. In some embodiments, the height (along the z-axis shown in FIG. 2-1A) of the tapered ends may vary at a side of the grating coupler. A dimension of a tapered end may depend on the position of the tapered end relative to the grating coupler. An intensity distribution profile within the grating coupler may provide an indication of the positioning and/or size of the tapered regions that would allow for each of the tapered ends to receive a substantially similar amount of optical power given an intensity profile for a particular grating coupler. FIG. 2-1D is a plot of relative intensity as a function of the location of the center point (zero along the x-axis). The intensity profile shown in FIG. 2-1D is for a sliced grating coupler having gratings 240 microns long (dimension L shown in FIG. 2-1A). Since the intensity peaks at the center point of the gratings of the grating coupler and decreased along the length of the gratings, tapered ends may increase in width from the center point to the outer edges of the gratings to improve uniformity in the amount of optical power coupled into the tapered ends. In some embodiments, each of the tapered ends may be suitably positioned and sized such that the tapered ends each capture a substantially equal amount of power. FIG. 2-1D indicates possible positions and widths of tapered ends 2-122a, 2-122b, 2-122c to represent this concept with respect to the intensity profile. Additional widths of the tapered ends are represented by the square dots in FIG. 2-1D. Tapered end 2-122a is positioned at the outermost tapered end and also has the largest width because it is capturing at a location of the grating coupler that has a low intensity. Tapered ends 2-122b and 2-122c are positioned closer to the center point and progressively have smaller widths.

In some embodiments, one or more dimensions of the tapered ends of a sliced grating coupler may vary to account for optical components (*e.g.,* optical splitters) within an optical system of an integrated device. To distribute the excitation energy among many waveguides within the integrated device, output waveguides from a sliced grating coupler may couple with an optical splitter to increase the number of waveguides propagating excitation energy. Some of the output waveguides may couple excitation energy along an optical path that has only one optical splitter, while output waveguides may couple excitation energy along an optical path that has two or more optical splitters. A dimension of the tapered ends may vary depending on the number of optical splitters in an optical path that each output waveguide couples to, in addition to accounting for intensity distribution within the grating. In some embodiments, a sliced grating coupler may have one tapered end with a larger dimension than both a tapered end proximate to an edge of the grating and a tapered end proximate to the center of a side of the grating.

FIG. 2-2A shows a schematic of a grating coupler 2-200 having grating 2-210. Tapered ends 2-222a, 2-222b, 2-222c couple to grating 2-210 at side 2-230 and couple to output waveguides 2-220. In this example, tapered end 2-222b has a larger width (dimension along the y-axis) than both tapered end 2-222a, which is positioned proximate to an edge of side 2-230, and tapered end 2-222c, which is positioned proximate to the center of side 2-230. This variation of tapered ends may compensate for the number of optical splitters that output waveguides 2-220 couple to in addition to the intensity profile of excitation energy in grating 2-210. As discussed above, the intensity may be highest at the center of the grating and decrease towards the edges of the grating. Output waveguide for tapered end 2-222a may account for the lower intensity proximate to the edges by reducing the number of optical splitters used downstream of the grating. In some embodiments, a path of excitation energy stemming from tapered end 2-222a may include only one optical splitter, while paths for tapered ends 2-222b and 2-222c may include two or more optical splitters.

### B. Optical Splitter(s)

One or more optical splitters (*e.g.,* multimode interference splitter) may be positioned between grating coupler 1-216 and waveguide 1-220, and may be included as part of routing region 1-202 in some embodiments. An optical splitter may couple to an output waveguide of the grating coupler as an input to the optical splitter and have two or more waveguides as outputs of the optical splitter. In some embodiments, multiple optical splitters may be used to divide the optical power received by the grating coupler 1-216 into waveguides 1-220 that propagate excitation energy to sample wells 1-108 in the pixel region 1-203 of the integrated device. In some embodiments, the number of optical splitters between the grating coupler and a waveguide that couples excitation energy to a sample well may vary depending on how output waveguides from the grating coupler are positioned and/or sized.

FIG. 2-2B shows an exemplary optical routing arrangement implementing optical splitters and the sliced grating coupler shown in FIG. 2-2A. In addition to grating 2-110, tapered ends at side 2-230 of the grating, and output waveguides 2-220, the multimode interference (MMI) splitters 2-240a, 2-240b and 2-242 may be used to further divide optical power propagating in the output waveguides to waveguides 1-220, which propagate excitation energy to sample wells in a pixel region of the integrated device. MMI splitters 2-240a and 2-240b are part of a first group of MMI splitters that each receive an output waveguide 2-220 as an input and have two outputs. MMI splitters in the first group may be less than 1mm from grating coupler 2-110. MMI splitter 2-242 is part of a second group of MMI splitters that each receive an output from an MMI splitter, such as MMI splitter 2-240b, and have two outputs that form waveguides 1-220. Although the MMI splitters shown in FIG. 2-2A have two outputs, it should be appreciated that more outputs may be used as the techniques described herein are not limited to the number of outputs in an optical splitter.

As shown in FIG. 2-2B, not all outputs from MMI splitters 2-240 in the first group form an input to MMI splitters 2-242 in the second group. As shown in FIG. 2-2A, outputs from MMI splitter 2-240b couples to two MMI splitters 2-242, while MMI splitter 2-240a does not couple to any MMI splitter 2-242. Referring again to FIG. 2-2A, the outer tapered ends, such as tapered end 2-222a, have a smaller width than another tapered end, such as tapered end 2-222b, and would propagate less optical power because of the intensity profile in grating 2-110. To have improved uniformity of optical power among waveguides 1-220, the outer tapered ends may provide optical power to paths having fewer MMI splitters. In this manner, one or more dimensions of the tapered ends and the number of MMI splitters used to form waveguides 1-220 from outputs of grating 2-110 may balance the intensity profile in the grating 2-110.

### C. Array Layout

Some embodiments of the present application relate to techniques for routing of waveguides and optical components in an integrated device in order to improve device performance and/or reduce time-dependent waveguide loss, as discussed above, such as by decreasing waveguide lengths. Another consideration in routing of waveguides and optical components may include reducing the footprint of the integrated device devoted to optical routing to allow for more surface area available for additional sample wells.

In some embodiments, waveguides may be routed in a radial distribution from the grating coupler. As shown in FIG. 2-2B output waveguides 2-220, MMI splitters 2-240 and 2-242, waveguides 1-220, are arranged radially from grating 2-110. To direct excitation energy towards sample wells in the pixel region 1-203 of the integrated device, waveguides 1-220 may be arranged in rows such that an individual waveguide 1-220 is positioned to couple with a row of sample wells of the integrated device, such as the row of sample walls 1-108 shown in FIG. 1-2A. With respect to the planar view of FIG. 2-2B, waveguides 1-220 can extend linearly along the x-axis within a pixel region of an integrated device.

In some embodiments, waveguides in a pixel region of an integrated device may be positioned substantially parallel to gratings of a grating coupler. An optical propagation region may optically couple the grating coupler to the waveguides. Such a waveguide layout may allow for shorter waveguides, which can reduce optical loss, including time-dependent waveguide loss. FIG. 3-1 shows a schematic of an exemplary optical routing arrangement having grating 3-110 of a grating coupler, propagation region 3-120, and waveguides 3-130a and 3-130b. Propagation region 3-120 may be positioned between two sets of output waveguides 3-130a and 3-130b. Since propagation region 3-120 is configured to provide excitation energy to multiple waveguides 3-130, it may be considered as an optical splitter. Waveguides 3-130a and 3-130b may be positioned to couple excitation energy to sample wells in pixel region(s) of an integrated device. As shown in FIG. 3-1, waveguides 3-130a and 3-130b stem from propagation region 3-120 along a direction (y-axis) substantially parallel to gratings 3-110 of the grating coupler. By having propagation region 3-120 positioned along a center portion of the waveguide layout, waveguides 3-130 may have a shorter length than in a waveguide layout where the waveguides are positioned substantially perpendicular to gratings of a grating coupler (such as shown in FIG. 2-2B).

In some embodiments, one or more optical splitters (*e.g.,* MMI splitters) may be positioned in a pixel region of an integrated device and configured to couple with two or more waveguides configured to optically couple with a row or column of sample wells. The one or more optical splitters may be positioned between two sets of sample wells. One or more input waveguides to an optical splitter may be positioned between the two sets of sample wells. An input waveguides may be a waveguide that couples to a propagation region, such as waveguides 3-130a and 3-130b that stem from propagation region 3-120 shown in FIG. 3-1. FIG. 3-2 shows a schematic of an exemplary waveguide layout that includes input waveguides 3-210a and 3-210b configured to act as inputs to optical splitters 3-214a and 3-214b, respectively. As shown in FIG. 3-2, input waveguides 3-210a and 3-210b are positioned between a first set of sample wells that include sample well 3-212a and a second set of sample wells that include sample well 3-212b. In addition, optical splitters 3-214a and 3-214b are positioned between the first set of sample wells and the second set of sample wells. Output waveguides 3-216a and 3-216b from optical splitter 3-214a are positioned to each couple with a row of sample wells in the first set of sample wells. Output waveguides 3-218a and 3-218b from optical splitter 3-214b are positioned to each couple with a row of sample wells in the second set of sample wells.

### D. Sample Wells

An integrated device of the type described herein may comprise one or more sample wells configured to receive samples therein. The integrated device may comprise pixels disposed in rows of sample wells (e.g., 512 sample wells). Each sample well may receive a sample, which may be disposed on a surface of the sample well, such as a bottom surface. The surface on which the sample is to be disposed may have a distance from the waveguide that is configured to excite the sample with a desired level of excitation energy. In some embodiments, the sample well may be positioned, with respect to the waveguide, such that an evanescent field of an optical mode propagating along the waveguide overlaps with the sample.

A sample well may have a top aperture through which one or more samples may access the sample well. The size of the top aperture may depend on different factors. One such factor relates to the fact that one or more samples may be positioned in the sample well. Accordingly, the top aperture may be large enough to allow for placement of the sample in the sample well. Another factor relates to background signals, such as stray light. When one or more samples are disposed in the sample well and are excited with excitation energy, background signals may cause undesired fluctuations in the emission energy, thus making the measurement noisy. To limit such fluctuations, the size of the top aperture may be configured to block at least a portion of the background signals. Similarly, the top aperture blocks the exposure of the sample such that only the portion of the sample under the aperture receives substantial excitation energy. Another factor relates to the directivity of emission energy emitted by the sample(s) in response to receiving excitation energy. In some embodiments, the size of the top aperture may be configured to provide a desired level of directivity.

Some embodiments of the integrated device include sample wells formed within a metal layer on the surface of the integrated device. The metal layer may provide benefits in detecting emission energy from a sample well by one or more sensors. The metal layer may act to reduce background signals and to improve the amount of emission energy detected by the one or more sensors. Such metal layers may improve the signal-to-noise ratio of the sensors by reducing noise artifacts that can arise from background signals (e.g., stray light, background light or direct excitation energy). In some embodiments, the integrated device may include metal layers configured to act as wiring to transmit and/or receive electrical signals. Such wiring may couple to a sensor and transmit signals to control the sensor and/or receive signals indicative of the emission energy detected by the sensor.

The depth of a sample well may be configured to maintain a desired separation between the location of the sample(s) and the metal layers. Such separation may ensure that the sample well is provided with a desired level of excitation energy while limiting optical loss caused by the metal layers. In some embodiments, the depth of a sample well may be configured such that the evanescent field of an optical mode propagating along a waveguide overlaps with the sample while limiting the extent to which it interacts with the metal layers. In some embodiments, the depth of a sample well may impact the timing of photon emission events of a marker (e.g., lifetime) associated with the sample. Accordingly, the depth may allow for distinguishing among different markers in the sample well based on timing characteristics associated with the individual lifetimes of the different markers.

The shape and size of the sample well and/or the composition of metal layers may act to direct emission energy towards a sensor. In some embodiments, a portion of the energy emitted by a sample in the form of emission energy may propagate downward through the layers of the integrated device. A portion of the emission energy may be received by one or more sensors disposed on the integrated device in a pixel associated with the sample well.

FIG. 4-1 is a cross-sectional view of integrated device that includes sample well 4-108, according to some non-limiting embodiments of the present application. Sample well 4-108 may be configured to receive sample 4-191, which may be retained at a surface of sample well 4-108. For example, surface 4-112 of sample well 4-108 may have a composition that adheres to the sample, at least temporarily for a duration of time. Surface 4-112 of sample well 4-108 may have one or more materials that provide selectivity for sample 4-191 to adhere to the surface rather than a side wall of sample well 4-108, as shown in FIG. 4-1. In some embodiments, surface 4-112 of sample well 4-108 may allow for photoactivated binding of sample 4-191 to sample well 4-108. In some embodiments, surface 4-112 of sample well 4-108 may be formed of silicon oxide, which may be terminated with one or more silanol groups (Si-OH). A silanol group may interact with another material (e.g., a chemical having a structure with one or more silane groups) to create a certain type of surface chemistry for the surface. Sample 4-191 may be disposed within sample well 4-108 through a top aperture of sample well 4-108. The top aperture may be configured to reduce ambient light or stray light from illuminating sample 4-191. A sample in sample well 4-108 may be analyzed under conditions, which may be referred to as "dark" conditions, where stray light that may excite a bulk solution over sample well 4-108 comes from a waveguide and/or a sample well of the integrated device. The top aperture may be configured to reduce stray light in sample well 4-108 from exciting the bulk solution over sample well 4-108. In some embodiments, sample well 4-108 may have a sub-wavelength cross-sectional dimension, which may reduce or inhibit propagation of light incident on the integrated device. The top aperture of sample well 4-108 may have a width W_{A} that is in the range of 50nm and 300nm, or any value or range of values within that range.

Sample 4-191 may be excited with excitation energy provided through waveguide 4-102, such as by waveguide 4-102 optically coupling with sample well 4-108. While waveguide 4-102 is illustrated as having a rectangular cross section in FIG. 4-1, any other suitable cross-sectional shape may be used, including the waveguides described herein. Waveguide 4-102 may be configured to provide an optical mode that evanescently decays from the waveguide. In some embodiments, the evanescent field of the mode may overlap, at least in part, with sample well 4-108. In this way, sample 4-191 may receive excitation energy through the evanescent field of the optical mode.

Sample well 4-108 may have a depth d_{W} between a surface 4-112 of sample well 4-108 and interface 4-127 between cladding 4-118 and metal layer(s) 4-122. Depth d_{W} may provide a suitable distance between a sample positioned at the surface 4-112 from metal layer(s) 4-122. Depth d_{W} may impact the timing of photon emission events of a marker (e.g., fluorescence lifetime of a fluorophore) associated with sample 4-191. Accordingly, depth d_{W} may allow for distinguishing among different markers in sample well 4-108 based on timing characteristics associated with the individual photon emission timing characteristics (e.g., fluorescence lifetimes) of the different markers. In some embodiments, depth d_{W} of sample well 4-108 may impact the amount of excitation energy received. Depth d_{W} of sample well 4-108 may be configured to improve the directivity of emission energy from sample 4-191. Depth d_{W} may be in the range of 50nm to 400nm, or any value or range of values within that range. In some embodiments, depth d_{W} is between 95nm and 150nm. In some embodiments, depth d_{W} is between 250nm and 350nm.

An integrated device may include metal layer(s) 4-122 over top cladding 4-118. Metal layer(s) 4-122 may act as a reflector for emission energy emitted by a sample in a sample well and may improve detection of emission energy by reflecting emission energy towards a sensor of the integrated device. Metal layer(s) 4-122 may act to reduce the background signal due to photons that do not originate within the sample well. Metal layer(s) 4-122 may comprise one or more sub-layers. Examples of suitable materials to be used as layers of metal layer(s) may include aluminum, copper, aluminum-copper alloys, titanium, titanium nitride, tantalum, and tantalum nitride. As shown in FIG. 4-1, metal layer(s) 4-122 may include two or more sub-layers. In some embodiments, a first sub-layer 4-124 positioned to interface with cladding 4-118 may include aluminum, tantalum or titanium. In embodiments where first sub-layer 4-124 includes aluminum, first sub-layer 4-124 may include an alloy of aluminum with silicon and/or copper. By having aluminum in the first sub-layer, optical loss of excitation energy propagating along a waveguide may be reduced. The thickness of the first sub-layer 4-124 may be in the range of 30nm to 165nm, or any value or range of values within that range.

Metal layer(s) 4-122 may further include a second sub-layer 4-126 disposed over the first sub-layer 4-124. In some embodiments, the second sub-layer 4-126 may include titanium. Titanium may reduce the amount of corrosion that occurs within metal layer(s) 4-122. The thickness of the second sub-layer 4-126 may be in the range of 1nm to 100nm, or any value or range of values within that range. In some embodiments, the thickness of the second sub-layer may be approximately 10nm.

Metal layer(s) 4-122 may further include a third sub-layer 4-128 disposed over the second sub-layer 4-126 and/or over the first sub-layer 4-124. The third sub-layer 4-128 may include titanium nitride and/or tanatalum nitride. The third sub-layer 4-128 may have a thickness in the range of 5nm to 100nm, or any value or range of values within that range. In some embodiments, the third sub-layer 4-128 may have a thickness of approximately 50nm.

Sample well 4-108 may have one or more sidewalls covered, at least partially, with a sidewall spacer 4-190. The composition of sidewall spacer 4-190 may be configured to enable a particular type of interaction with sample 4-191. In some embodiments, sidewall spacer 4-190 may have a composition configured to passivate the sidewalls of sample well 4-108 to reduce the amount of sample that adheres to the sidewall of sample well 4-108. By providing a sample well with only the sidewalls coated with a spacer material, a different type of interaction with sample 4-191 may occur at sidewalls 4-190 than at surface 4-112. In some embodiments, the surface 4-112 of sample well 4-108 may be coated with a functionalized silane to improve adherence of sample 4-191 to the surface. By coating the sidewalls with spacer 4-190, the surface 4-112 of the sample well 4-108 may be selectively coated with the functionalized silane. The composition of sidewall spacer 4-190 may be selected to provide selective coatings of sidewall spacer 4-190 relative to surface 4-112 of sample well 4-108 that is substantially parallel to the waveguide, which may be considered as a "bottom surface" of the sample well. Sidewall spacer 4-190 may have a thickness in the range of 3nm to 30nm, or any value or range of values within that range. In some embodiments, sidewall spacer 4-190 may have a thickness of approximately 10nm. Examples of suitable materials used to form sidewall spacer 4-190 include Al₂O₃, TiO₂, TiN, TiON, TaN, Ta₂O₅, Zr₂O₅, Nb₂O₅, and HfO₂. In some embodiments, sidewall spacer 4-190 includes TiN, which may provide a desired level of directionality of emission energy towards a sensor due to the refractive index of TiN. In some embodiments, sidewall spacer 4-190 may be configured to block scattered light, thus reducing the amount of scattered light that may illuminate sample 4-191.

In some embodiments, the sample well structure may have a portion proximate to waveguide 4-102 that lacks spacer material on the sidewalls. The distance between the bottom surface, such as surface 4-112 shown in FIG. 4-1, and sidewall spacer 4-190 may be in the range of 10 nm to 50 nm, or any value or range of values within that range. Such a configuration may allow positioning of surface 4-112 of the sample well closer to the waveguide 4-102, which may improve coupling of excitation energy from waveguide 4-102 to sample well 4-108 and reduce the impact of metal layer(s) 4-122 on optical loss of excitation energy propagating along waveguide 4-102.

### E. Waveguides

An excitation source may be used to generate excitation energy at a desired wavelength (*e.g.,* 532nm). The excitation energy may be provided to individual samples using one or more waveguides. The waveguide(s) may be configured to couple a portion of the excitation energy to individual samples, for example via evanescent coupling. In some embodiments, the sample wells may be arranged in rows and columns, and individual waveguides may be configured to deliver excitation energy to sample wells of a corresponding row or column. In some embodiments, the waveguide may be configured to substantially uniformly provide (*e.g.,* with a variation in intensity that is less than 10%) excitation energy among the sample wells in a row or column. To provide such uniform illumination of the sample wells, the waveguide may be configured to have a coupling coefficient, with respect to the sample well, that varies along the length of the row or column. Accordingly, individual sample wells positioned relative to the waveguide may receive a fraction of the excitation energy propagating along the waveguide. As the excitation energy propagating along the waveguide is depleted by successive coupling with sample wells, the coupling coefficient may be progressively increased to provide a substantially uniform amount of excitation energy among the sample wells coupling with the waveguide. To provide such space-dependent coupling coefficients, tapering of the waveguide may be used. A "taper" may refer to a waveguide having a dimension (*e.g.,* width) that varies along its length. The taper may be configured to progressively expand the supported optical mode farther into the surrounding region (*e.g.,* cladding). Through such tapering of the waveguide, the coupling coefficient may increase along a propagation axis of the waveguide.

The waveguide(s) may be further configured to effectively couple excitation energy to the sample wells while reducing optical loss. Because the sample wells may be disposed in proximity to a metal layer, the excitation energy guided in the waveguide may experience optical loss due to metal scattering and/or metal absorption. To reduce optical loss caused by the metal layer(s), the waveguide may be configured to provide a mode confinement such that the spatial overlap of the mode with respect to the metal layer is reduced. The mode confinement may be selected to provide a desired overlap with the sample wells while reducing the interaction with the metal layer(s).

The waveguides may be fabricated from a material that is transparent (e.g., having a propagation loss that is less than 2dB/cm) at the wavelength of the excitation energy. For example, silicon nitride may be used as a material for guiding excitation energy.

In some embodiments, channel waveguides may be used to provide excitation energy to the sample wells of an integrated device. An example of a suitable channel waveguide is shown in FIG. 1-4. A channel waveguide of an integrated device may be positioned relative to a row or column of sample wells to allow for coupling of excitation energy to one or more sample wells along the row or column.

In some embodiments, rib waveguides and/or ridge waveguides may be used to provide excitation energy to the sample wells. Rib waveguides, or ridge waveguides, may comprise a first layer, referred to as the "slab", and a second layer, referred to as the "raised region". The position of the raised region with respect to the slab may determine the location of the optical mode. The thickness of the slab and the raised region may be configured to provide a desired optical profile. For example, it may be desirable to have an optical mode profile such that the evanescent field overlaps with the sample while reducing the interaction with the metal layer(s). FIG. 4-2A is a cross sectional view of an exemplary waveguide according to some non-limiting embodiments. Waveguide 4-200, also referred to herein as "rib waveguide", may comprise a slab 4-202 and a raised region 4-204. Waveguide 4-200 may be configured to support at least one optical mode at the desired wavelength. In some embodiments, waveguide 4-200 may support a single optical mode, *e.g.,* the TE₀ mode. The raised region may have a width W_{RR} that is between 100nm and 4µm in some embodiments, and a thickness T_{RR} that is between 50nm and 500nm in some embodiments. In some embodiments, T_{RR} is between 100nm and 200nm. Slab 4-202 may have a thickness T_{S} that is between 50nm and 500nm. In some embodiments, T_{S} is between 150nm and 250nm. In some embodiments, slab 4-202 may be shared among a plurality of waveguides 4-200, such that a plurality of raised regions 4-204 are disposed on slab 4-202. Such raised regions may be separated by a distance, along the y-axis, large enough to reduce mutual optical coupling between slabs. For example, slab 4-202 may extend to overlap among multiple sample wells and raised regions 4-204 may overlap with individual rows or columns of sample wells. Alternatively, individual waveguides may comprise separate slabs. FIG. 4-2B is a cross sectional view of another exemplary waveguide according to some non-limiting embodiments. Waveguide 4-250, also referred to herein as "ridge waveguide," may comprise a slab 4-252 and a raised region 4-254. The raised region 4-254 may have a width W_{RR} that is between 100nm and 4µm in some embodiments, and a thickness T_{RR} that is between 50nm and 500nm in some embodiments. In some embodiments, T_{RR} is between 100nm and 200nm. Slab 4-202 may have a thickness T_{S} that is between 50nm and 500nm. In some embodiments, T_{S} is between 150nm and 250nm. Slab 4-208 may have a width W_{S} between 500nm and 5µm in some embodiments.

Waveguides 4-200 and 4-250 may comprise a bottom cladding 4-208 and a top cladding 4-206. The bottom and top cladding may be formed from materials having a refractive index that is lower than the refractive index of the raised regions 4-204 and 4-254. In some embodiments, the bottom and top cladding may comprise silicon oxide. The ratio T_{RR}/T_{S} may be selected to obtain a desired level of optical confinement. For example, such ratio may be selected so that the optical mode of the waveguide experiences reduced optical loss from the metal layer(s) while also providing a desired level of coupling to the sample wells. Requiring less fabrication steps compared to waveguide 4-250, waveguide 4-200 may be preferable in some embodiments. In other embodiments, waveguide 4-250 may be preferable because it provides a lower degree of coupling to other waveguides in comparison to waveguide 4-200.

In some embodiments, the slab of the waveguide and/or the raised region of the waveguide may comprise more than one layer. FIG. 4-2C illustrates a rib waveguide, having a slab comprising layers 4-282 and 4-283. Layers 4-282 and 4-283 may be formed from different materials. The ratio of the thickness of layer 4-282 to the thickness of the slab may be between 5% and 95%. In some embodiments, layer 4-282 may comprise silicon nitride and layer 4-283 may comprise an etch stop material or end point material, which may aid in fabrication of the raised region of the waveguide. Alternatively, or additionally, the raised region of the waveguide may comprise a plurality of layers, such as layers 4-284 and 4-285. Layers 4-284 and 4-285 may be formed from different materials. The ratio of the thickness of layer 4-284 to the thickness of the slab may be between 5% and 95%. In some embodiments, layers 4-284 and 4-285 may each comprise different dielectric materials (*e.g.,* silicon nitride, aluminum oxide).

A waveguide of the type described herein may be disposed in correspondence with a sample well as illustrated in FIG. 4-1. For example, a waveguide may be positioned in a way such that an optical mode propagating along the waveguide can evanescently couple to the sample well. In some embodiments, the surface of the sample well in which a sample is disposed may be placed in contact with a surface of the waveguide. In other embodiments, such surfaces may be separated. In yet other embodiments, the surface of the sample well on which a sample is disposed may be placed inside the waveguide.

FIGs. 4-3A-C are cross sectional views illustrating three different coupling configurations. According to coupling configuration 4-300A, a waveguide 4-301 may be separated from the bottom surface of sample 4-312 by a distance h_{W}. Waveguide 4-301 may be implemented using waveguide 4-200, 4-250 or 4-280. Although waveguide 4-301 is shown to have a ridge, it should be appreciated that these coupling configurations can be implemented with any suitable type of waveguide. In some embodiments, waveguide 4-301 may be a channel waveguide, such as the channel waveguide shown in FIG. 1-4. Waveguide 4-301 may be separated from metal layer 4-310 by a distance h_{M} greater than h_{W}. Metal layer 4-310 may include as metal layer(s) 4-122 of FIG. 4-1, and sample well 4-312 may act as sample well 4-108 of FIG. 4-1. Distance h_{W} may be configured to provide a desired degree of optical coupling. For example, h_{W} may be between 50nm and 500nm in some embodiments, or between 100nm and 200nm in some embodiments. Distance h_{M} may be configured to limit optical loss caused by metal layer 4-310. For example, h_{M} may be between 200nm and 2µm in some embodiments, or between 350nm and 650nm in some embodiments.

According to coupling configuration 4-300B, the bottom surface of sample well 4-312 may be disposed within waveguide 4-301. Compared to the configuration illustrated in FIG. 4-3A, this configuration may lead to a greater coupling coefficient to the sample well. However, optical loss may be greater in this configuration due to the proximity to metal layer 4-310, or scattering loss caused by the penetration of the sample well into the waveguide.

According to coupling configuration 4-300C, the bottom surface of sample well 4-312 may be disposed in contact with a surface of waveguide 4-301. The configuration may be obtained, for example, by using a surface of waveguide 4-301 as an etch stop to form sample well 4-312. Compared to the configuration illustrated in FIG. 4-3A, this configuration may lead to a greater coupling coefficient to the sample well. However, optical loss caused by the proximity of metal layer 4-310 to the waveguide may be greater in this configuration.

FIGs. 4-4A to 4-4C are cutaway isometric views illustrating coupling configurations 4-300A, 4-300B and 4-300C respectively. As illustrated, an integrated device may comprise a plurality of sample wells 4-312. Waveguide 4-301 may be configured to provide excitation energy to the individual sample wells.

As described above, a waveguide of the type describe herein may be configured to support at least one optical mode. As defined herein, the "optical mode", or simply the "mode", refers to the profile of the electromagnetic field associated with a particular waveguide. The optical mode may propagate excitation energy along a waveguide. The optical mode may be configured to evanescently couple to a sample well, thus exciting a sample disposed therein. In response the sample may emit emission energy. At the same time, the optical mode may be configured to limit optical loss associated with metal layer(s) formed at a surface of the device. FIG. 4-5 is a cross sectional view illustrating an exemplary optical mode according to some non-limiting embodiments. Specifically, FIG. 4-5 shows a heat map (black and white conversion of a color heat map) illustrating a cross-sectional view of an optical mode propagating along a waveguide. As illustrated, the optical mode may exhibit a maximum 4-508 in correspondence with a region of waveguide 4-301, and may evanescently extend into the regions surrounding the waveguide, *e.g*., the top and bottom cladding. In some embodiments, the optical mode may comprise an evanescent field 4-510 that may couple to sample well 4-312. The intensity of the mode at the interface between the top cladding and the metal layer may substantially small (e.g., less than 5%) with respect to the maximum 4-508.

In some embodiments, the integrated device may be configured to excite individual samples with substantially uniform intensities (*e.g.,* with a variation that is less than 10%). Having a substantially uniform excitation across the samples may improve the likelihood of the emission energy emitted by the samples being within the dynamic range of the sensors. An optical waveguide, including one according to the techniques described herein may be configured to provide an optical coupling to the sample wells that varies along its length so as to provide a substantially uniform excitation across samples located within the sample wells. According to some non-limiting embodiments, the width of the waveguide may vary along the length of the waveguide, thus providing a position-dependent mode profile. In some embodiments, a waveguide having one or more dimensions that vary along the length of the waveguide may be implemented. For example, a device according to some embodiments may include a waveguide having a tapered width that varies along the length of the waveguide. FIG. 4-6 is a top view illustrating a tapered waveguide and a plurality of sample wells. The tapered waveguide may have a slab 4-602, and a raised region 4-604. The taper of the waveguide may extend along the x-axis, and may configured to evanescently couple to each of the sample wells 4-312_{A}, 4-312_{B}, 4-312_{C}, 4-312_{D}, and 4-312_{E}. While FIG. 4-6 illustrates an integrated device having five sample wells, any other suitable number of wells may be used. The width of the raised region may varied according to any suitable function, such as exponentially, logarithmically, linearly, quadratically, cubically, or any suitable combination thereof. The taper of the waveguide illustrated in FIG. 4-6 may be configured to receive excitation energy from the left-hand side, such as through excitation energy incident to a grating coupler optically coupled to the waveguide, and to support propagation of one or more optical modes from left to right. The raised region may have a first width W_{RRIN} at x=x₁, and a second width W_{RROUT} at x=x₂. In some embodiments, W_{RROUT} may be greater than W_{RRIN}. In this way, the coupling coefficient of the taper with respect to sample well 4-312_{A} is lower that the coupling coefficient of the taper with respect to sample well 4-312_{B}, the coupling coefficient of the taper with respect to sample well 4-312_{B} is lower that the coupling coefficient of the taper with respect to sample well 4-312_{C}, etc. Because the excitation energy propagating along the waveguide decreases due to coupling with the sample wells and/or optical losses, having a coupling coefficient that increases along the length of the waveguide may allow the samples to receive a substantially uniform excitation energy.

For channel waveguides, the coupling coefficient may be increased for decreased waveguide width. Thus, a tapered channel waveguide will decrease in width along the direction of propagation to increase the coupling coefficient and provide compensation for optical loss. In some embodiments, a channel waveguide may have a taper with a dimension in the range of 600 nm to 1500nm, or any value or range of values in that range, at the start of the taper and a dimension in the range of 200nm to 500nm, or any value or range of values in that range, at the end of the taper.

For rib waveguides and ridge waveguides, the coupling coefficient may increase with increased width of the raised region, W_{RR}. Thus, a tapered rib/ridge waveguide may increase in W_{RR} along the direction of propagation to increase the coupling coefficient and provide compensation for optical loss. In some embodiments, W_{RRIN} may be in a range between 150 nm and 500 nm, or any value or range of values in that range. In some embodiments, W_{RROUT} may be between 100 nm and 200 nm, or any value or range of values in that range. FIG. 4-7 is a plot illustrating an electric field, measured at a location corresponding to a sample, as function of the width of the raised region 4-604. As illustrated, as the width of the raised region is increased, the electric field at the location corresponding to the sample increases, due to the fact that the optical mode extends farther into the surrounding regions.

A waveguide of the type described herein may be configured to limit optical loss associated with proximity to metal layer(s). In some embodiments, a waveguide may have a configuration, for example, to enhance the decay rate of the evanescent field. Compared to channel waveguides having rectangular cross sections, ridge or rib waveguides may exhibit a greater decay rate of the evanescent field. FIG. 4-8 is a plot illustrating a comparison between an optical mode profile associated with a channel waveguide having a rectangular cross section and an optical mode profile associated with a rib waveguide. Plot 4-800 illustrates mode intensity as a function of the position along the z-axis (the propagation axis). In the example illustrated, the sample is located in between lines 4-809 and 4-810, where line 4-809 is a position, along the z-axis, corresponding to bottom of the sample well, and the line 4-810 is a position, along the z-axis, corresponding to interface 4-127 between cladding 4-118 and metal layer(s) 4-122. Mode intensity 4-801 represents the mode profile associated with a rib waveguide, such as rib waveguide 4-200, and mode intensity 4-802 represents the mode profile associated with a rectangular channel waveguide. While the two waveguides may be configured to exhibit a substantially similar mode intensity at the sample's location, the rib waveguide may exhibit a greater decay rate in the evanescent portion, thus providing a lower intensity at the interface 4-127. In this way, optical loss caused by the metal layer 4-122 may be limited.

Some embodiments relate to an integrated device having one or more waveguides configured to support multiple modes. The two or more modes of such a multimode waveguide may combine through interference of the modes in a manner where the power distribution of excitation energy varies in a direction perpendicular to the direction of light propagation along the multimode waveguide. The variation in power distribution may include regions along the direction of light propagation where the power distribution is broader in one or more directions perpendicular to the direction of light propagation than in other regions. In some embodiments, the power distribution may broaden in a direction towards a sample well in a region of the multimode waveguide proximate to the sample well. The broadening of the power distribution of excitation energy may improve coupling of excitation energy to the sample well. In some embodiments, the power distribution may decrease along the direction in a region of the multimode waveguide that is non-overlapping with the sample well. The decrease in the power distribution may reduce optical loss of excitation energy by reducing an amount of excitation energy that extends outside the waveguide. In some embodiments, two or more modes may interfere to beat with a characteristic beat length. The characteristic beat length may depend on the type of modes being combined by the multimode waveguide. In some embodiments, the characteristic beat length may be substantially similar to a distance between neighboring sample wells of the integrated device. The multi-mode waveguide may be configured to support any suitable number of modes (*e.g.,* 2, 3, 4), type of modes (*e.g.,* TE, TM) and/or order of the modes (*e.g.,* 1^{st}, 3^{rd}). In some embodiments, the multimode waveguide combines first and third order TE modes of the excitation energy.

FIG. 5-1A illustrates a planar view of an exemplary waveguide structure configured to support multiple modes. The waveguide structure includes single-mode region 5-110, multimode region 5-136, and mode coupler 5-120. Single-mode region 5-110 is configured to support propagation of light having a single mode and couple light into mode coupler 5-120. Mode coupler 5-120 is configured to receive light having a single mode and couple light into multimode region 5-136, which is configured to support two or more modes of light. Sample wells 5-108a, 5-108b, and 5-108c lie in a xy plane parallel to the waveguide structure such that they overlap with multimode region 5-136. Sample wells 5-108a, 5-108b, and 5-108c are separated by a dimension, Ds, along the direction of light propagation of the waveguide structure (x-direction as shown in FIG. 5-1A). The dimension, Ds, may be approximately a characteristic beat length of a multi-mode interference supported by multi-mode region 5-136. FIG. 5-1B is a heat map (black and white conversion of a color heat map) of power distribution along the multimode region 5-136 both in a xy plane parallel to the one shown in FIG. 5-1B (upper plot) and in a zx plane perpendicular to the one shown in FIG. 5-1B (lower plot). Locations of sample wells 5-108a, 5-108b, and 5-108c are shown by double parallel lines and are separated by dimension Ds, which is approximately a characteristic beat length for the combination of the first and third order TE modes. As shown in FIG. 5-1B, the power distribution broadens in a region of the multimode region 5-136 that overlaps with each of the sample wells in a direction towards the sample wells (along the z-direction) as shown in the lower plot, and reduces along this direction in a region of the multimode region 5-136 between neighboring sample wells. As shown in the upper plot, the opposite trend occurs in the xy plane where the power distribution is narrower at regions that overlap with sample wells and broader in regions between neighboring sample wells.

### IV. Fabrication Techniques

Formation of an integrated device of the type described herein may use various fabrication techniques, some of which may be performed within a standard semiconductor foundry. In some embodiments, conventional complementary metal-oxide-semiconductor (CMOS) fabrication techniques may be used. For example, at least some of the following fabrication techniques may be used: photolithography, wet etching, dry etching, planarization, metal deposition, chemical vapor deposition, atomic layer deposition, oxidation, annealing, epitaxial growth, ion implantation, diffusion, wire bonding, flip-chip bonding, etc.

Formation of an integrated device may include a plurality of photolithographic process steps. Each photolithographic process step may comprise an exposure to ultra-violet (UV) light through a photomask, a development process to form a relief image in the photoresist, and an etch process to transfer the photoresist relief image into at least one underlying layer. The photomask may be positive or negative, and may be patterned according to a desired configuration. For example, one or more photolithographic process steps may be used to form waveguides of the type described here. Additionally, one or more photolithographic process steps may be used to form sample wells of the type described here.

Fabrication of a rib waveguide, such as waveguide 4-200, may be performed using a variety of different processes. Regardless of the particular process utilized, the fabrication may comprise a photolithographic process step to form a raised region. Accordingly, following an exposure to UV light and subsequent development of the relief image, a partial etch process may be performed to form the raised region while retaining at least a portion of the slab.

In some embodiments, formation of an integrated device may include a timed etch process. The timed etch process may be used to form a rib waveguide. The duration of the etch process may be selected so as to remove a desired amount of dielectric material from the slab. Accordingly, based on the duration of the timed etch process, a desired ratio T_{RR}/Tₛ may be defined. Formation of a rib waveguide based on a timed etch process may utilize a photolithographic fabrication step. FIGs. 6-1A to 6-1D illustrate a method of fabrication of a rib waveguide using a timed etch, according to some non-limiting embodiments. In the fabrication step illustrated in FIG. 6-1A, a substrate, such as a silicon substrate, may be provided. The substrate may comprise bottom dielectric layer 6-101, such as a silicon oxide layer. The dielectric layer 6-101 may be planarized using a chemical mechanical planarization (CMP) process. The substrate may further comprise a dielectric film 6-102. The dielectric film 6-102 may comprise silicon nitride in some embodiments. The thickness of the dielectric film may be between 90nm and 500nm in some embodiments.

In the fabrication step illustrated in FIG. 6-1B, a layer of photoresist 6-103 may be deposited on the dielectric film. The layer of photoresist may be patterned, using a photolithographic process step, to form a desired shape. The photoresist may be positive or negative.

In the fabrication step illustrated in FIG. 6-1C, a timed etch process may be performed to form raised region 6-104. Such process may etch regions of the surface of the dielectric film not covered by the photoresist. The duration of the etch process may be selected so as to provide a desired ratio between the thickness of the slab and the thickness of the raised region. For example, the duration may be selected to etch a fraction of the dielectric film that is between 5% and 95%. The etch process may be dry or wet. After the formation of the raised region, the layer of photoresist may be stripped.

In the fabrication step illustrated in FIG. 6-1D, a top dielectric layer 6-105 may be grown, or deposited, on the raised region 6-104 resulting from the timed etch process. The top dielectric layer may comprise silicon oxide. The top dielectric layer may be planarized using a CMP process. The waveguide illustrated in FIG, 6-1D may serve as waveguide 4-200 of FIG. 4-2A.

Some embodiments relate to another technique to fabricate a rib waveguide of the type described herein. Unlike the fabrication process illustrated in FIGs. 6-1A to 6-1D, such technique may utilize an etch stop layer to define the thickness of the raised region. Compared to timed etch processing, the use of an etch stop may allow for a more accurate control of the thickness, which may lead to a more accurate control of the optical mode profile. As a downside, such technique may lead to a waveguide having a layer of etch stop material between the raised region and the slab. Such etch stop material may have an absorption coefficient that is greater than the absorption coefficient of the dielectric film, and as a result, may cause the optical mode to experience optical loss. Such fabrication technique may also utilize a photolithographic fabrication step to form the raised region.

FIGs. 6-2A to 6-2D illustrate a method of fabrication of a rib waveguide, according to some non-limiting embodiments. In the fabrication step illustrated in FIG. 6-2A, a substrate, such as a silicon substrate, may be provided. The substrate may comprise bottom dielectric layer 6-201, such as a silicon oxide layer. The dielectric layer 6-201 may be planarized using a chemical mechanical planarization (CMP) process. The substrate may further comprise a first dielectric film 6-202, which may comprise silicon nitride in some embodiments. The substrate may further comprise an etch stop layer 6-203, disposed on the first dielectric film. The substrate may further comprise a second dielectric film 6-204 disposed on the etch stop layer. The second dielectric film may be formed from the same material as the first dielectric film, or alternatively, from a different material. The thickness of the first and second dielectric film may be configured to provide a desired ratio T_{RR}/T_{S}. In some embodiments, the thickness of the first dielectric film is between 100nm and 300nm. In some embodiments, the thickness of the second dielectric film is between 100nm and 200nm.

In the fabrication step illustrated in FIG. 6-2B, a layer of photoresist 6-205 may be deposited on the second dielectric film. The layer of photoresist may be patterned, using a photolithographic process step, to form a desired shape. The photoresist may be positive or negative.

In the fabrication step illustrated in FIG. 6-2C, an etch process may be performed to form raised region 6-206. Such process may etch regions of the surface of the dielectric film not covered by the photoresist. The etch process may continue until the at least a portion of the etch stop layer has been uncovered. The etch process may be dry or wet. After the formation of the raised region, the layer of photoresist may be stripped.

In the fabrication step illustrated in FIG. 6-2D, a top dielectric layer 6-207 may be grown, or deposited, on the raised region 6-206. The top dielectric layer may comprise silicon oxide. The top dielectric layer may be planarized using a CMP process. The waveguide illustrated in FIG, 6-2D may serve as waveguide 4-200 of FIG. 4-2A.

Some embodiments relate to yet another technique to fabricate a rib waveguide of the type described herein. Such fabrication technique may utilize an endpoint layer. According to one such technique, light may be shined toward a surface of the substrate throughout the duration of the etch process. Reflected light may be sensed during the etch process. When the endpoint layer is at least partially uncovered, the reflected light may exhibit a recognizable pattern, such as a polarization pattern and/or an interference pattern and/or an optical intensity that is above or below a predetermined threshold. When the recognizable pattern is sensed, the etch process may be arrested. In this way, the thickness of the etched region may be finely controlled. Similarly to the fabrication technique illustrated in FIGs. 6-2A to 6-2D, such technique may utilize a photolithographic process step to form the raised region of a rib waveguide. According to another type of endpoint layer, the optical emission spectrum of the etch plasma may be monitored during etching. This optical emission spectrum contains intensity peaks that are representative of the composition of the plasma, which is in turn representative of the material that is being etched. In this way, it may be possible to determine when the endpoint material layer is first exposed to the plasma, or when the endpoint material layer has been etched away.

FIGs. 6-3A to 6-3D illustrate a method of fabrication of a rib waveguide, according to some non-limiting embodiments. In the fabrication step illustrated in FIG. 6-3A, a substrate, such as a silicon substrate, may be provided. The substrate may comprise bottom dielectric layer 6-301, such as a silicon oxide layer. The dielectric layer 6-301 may be planarized using a chemical mechanical planarization (CMP) process. The substrate may further comprise a first dielectric film 6-302, which may comprise silicon nitride in some embodiments. The substrate may further comprise an endpoint layer 6-303 disposed on the first dielectric film. The endpoint layer may exhibit a specific optical property. For example, it may exhibit a reflectivity that is larger than the reflectivity of the dielectric films. Alternatively, it may exhibit an optical emission spectrum with a characteristic emission wavelength. The substrate may further comprise a second dielectric film 6-304 disposed on the endpoint layer. The second dielectric film may be formed from the same material as the first dielectric film, or alternatively, from a different material. The thickness of the first and second dielectric film may be configured to provide a desired ratio T_{RR}/T_{S}. In some embodiments, the thickness of the first dielectric film is between 100nm and 300nm. In some embodiments, the thickness of the second dielectric film is between 80nm and 200nm.

In the fabrication step illustrated in FIG. 6-3B, a layer of photoresist 6-305 may be deposited on the second dielectric film. The layer of photoresist may be patterned, using a photolithographic process step, to form a desired shape. The photoresist may be positive or negative.

In the fabrication step illustrated in FIG. 6-3C, an etch process may be performed to form raised region 6-306, and light may be shined on the surface of the substrate. Such a process may etch regions of the surface of the dielectric film not covered by the photoresist. The etch process may continue until at least a portion of the endpoint layer has been uncovered. When the endpoint layer has been uncovered, reception of the light reflected by the endpoint layer 6-303 may trigger circuitry configured to arrest the etch process. After the formation of the raised region, the layer of photoresist may be stripped.

In the fabrication step illustrated in FIG. 6-3D, a top dielectric layer 6-307 may be grown, or deposited, on the raised region 6-306. The top dielectric layer may comprise silicon oxide. The top dielectric layer may be planarized using a CMP process. The waveguide illustrated in FIG, 6-3D may serve as waveguide 4-200 of FIG. 4-2A.

Some embodiments of the present application relate to techniques for forming a ridge waveguide, such as waveguide 4-250 of FIG. 4-2B. Fabrication of a ridge waveguide may comprise some of the fabrication steps utilized to form a rib waveguide. Such fabrication may utilize the techniques described in connection with FIGs. 6-1A to 6-1D, the techniques described in connection with FIGs. 6-2A to 6-2D or the techniques described in connection with FIGs. 6-3A to 6-3D. In addition, a further etch process may be utilized to fully etch the dielectric film in the regions outside the desired slab to form a ridge waveguide.

FIGs. 6-4A to 6-4D illustrate a method of fabrication of a ridge waveguide, according to some non-limiting embodiments. In the fabrication step illustrated in FIG. 6-4A, a rib waveguide may be provided. The rib waveguide may be obtained using any one of the fabrication techniques described above. The rib waveguide may comprise a dielectric layer 6-401, a slab 6-402 and a raised region 6-403.

In the fabrication step illustrated in FIG. 6-4B, a layer of photoresist 6-404 may be deposited on the dielectric film. The layer of photoresist may be patterned, using a photolithographic process step, to form a desired shape. The photoresist may be positive or negative.

In the fabrication step illustrated in FIG. 6-4C, an etch process may be performed to form etched slab 6-405. The etch process may continue until at least a portion of dielectric layer 6-401 has been uncovered.

In the fabrication step illustrated in FIG. 6-4D, a top dielectric layer 6-406 may be grown, or deposited, on the raised region 6-403. The top dielectric layer may comprise silicon oxide. The top dielectric layer may be planarized using a CMP process. The waveguide illustrated in FIG, 6-4D may serve as waveguide 4-250 of FIG. 4-2B.

### V. Conclusion

Having thus described several aspects and embodiments of the technology of this application, it is to be appreciated that various alterations, modifications, and improvements will readily occur to those of ordinary skill in the art. Such alterations, modifications, and improvements are intended to be within the scope of the invention according to the appended claims. It is, therefore, to be understood that the foregoing embodiments are presented by way of example only and that, within the scope of the appended claims, inventive embodiments may be practiced otherwise than as specifically described.

Also, as described, some aspects may be embodied as one or more methods. The acts performed as part of the method may be ordered in any suitable way within the scope of the methods according to the appended claims.

The indefinite articles "a" and "an," as used herein in the specification and in the embodiments, unless clearly indicated to the contrary, should be understood to mean "at least one."

The phrase "and/or," as used herein in the specification and in the embodiments, should be understood to mean "either or both" of the elements so conjoined, i.e., elements that are conjunctively present in some cases and disjunctively present in other cases.

As used herein in the specification and in the embodiments, the phrase "at least one," in reference to a list of one or more elements, should be understood to mean at least one element selected from any one or more of the elements in the list of elements.

In the embodiments, as well as in the specification above, all transitional phrases such as "comprising," "including," "carrying," "having," "containing," "involving," "holding," "composed of," and the like are to be understood to be open-ended, i.e., to mean including but not limited to. The transitional phrases "consisting of" and "consisting essentially of" shall be closed or semi-closed transitional phrases, respectively.

## Claims

1. An integrated device (1-102) comprising:
a plurality of sample wells (1-108);
a first optical waveguide (1-220) configured to couple excitation energy to a first portion of the plurality of sample wells;
a second optical waveguide (1-220) configured to couple the excitation energy to a second portion of the plurality of sample wells; and
a grating coupler (1-216, 2-110, 2-200) having a grating region (2-210) and configured to receive the excitation energy from an optical source positioned outside the integrated device, and to couple the excitation energy to the first optical waveguide and to the second optical waveguide;
a first output waveguide (2-120) coupled to the grating coupler at a side of the grating region and coupled to a first plurality of optical waveguides, including the first optical waveguide, via at least one optical splitter; and
a second output waveguide (2-120) coupled to the grating coupler at the side of the grating region and coupled to a second plurality of optical waveguides, including the second optical waveguide, via at least one optical splitter,
wherein the first output waveguide is more proximate to the center of the side of the grating region than the second output waveguide, and wherein the first output waveguide has a smaller width than the second output waveguide.

2. The integrated device of claim 1, wherein the integrated device further comprises one or more photodetectors positioned to receive excitation energy that passes through the grating coupler.

3. The integrated device of any of claims 1-2, wherein the grating coupler is a first optical grating coupler, and the integrated device further comprises a second optical coupler optically coupled to the first waveguide and configured to receive the excitation energy from the first waveguide and to couple the excitation energy to a photodetector positioned in the integrated device.

4. The integrated device of any of claims 1-3, wherein the integrated device further comprises:
a metal layer disposed on a surface of the integrated device;
wherein the plurality of sample wells is formed through the metal layer.

5. The integrated device of claim 4, wherein at least one of the plurality of sample wells comprises a bottom surface proximate to the first waveguide, the bottom surface being recessed through the metal layer.

6. The integrated device of claim 5, wherein the bottom surface is positioned at a distance from the metal layer that is between 100nm and 350nm.

7. The integrated device of claim 5, wherein the bottom surface is positioned at a distance from the first optical waveguide that is between 10nm and 200nm.

8. The integrated device of any of claims 4-7, wherein the metal layer includes an aluminum layer and a titanium nitride layer, and the aluminum layer is proximate to the first and second waveguides.

9. The integrated device of any of claims 1-8, wherein the optical grating comprises an etched region formed in a layer of silicon nitride.

10. A method of forming an integrated device, the method comprising:
forming a plurality of sample wells (1-108);
forming a first optical waveguide (1-220) configured to couple excitation energy to a first portion of the plurality of sample wells;
forming a second optical waveguide (1-220) configured to couple the excitation energy to a second portion of the plurality of sample wells; and
forming a grating coupler (1-216, 2-110, 2-200) having a grating region (2-210) and configured to receive the excitation energy from an optical source positioned outside the integrated device, and to couple the excitation energy to the first optical waveguide and to the second optical waveguide;
forming a first output waveguide (2-120) coupled to the grating coupler at a side of the grating region and coupled to a first plurality of optical waveguides, including the first optical waveguide, via at least one optical splitter; and
forming a second output waveguide (2-120) coupled to the grating coupler at the side of the grating region and coupled to a second plurality of optical waveguides, including the second optical waveguide, via at least one optical splitter,
wherein the first output waveguide is more proximate to the center of the side of the grating region than the second output waveguide, and wherein the first output waveguide has a smaller width than the second output waveguide.

11. The method of claim 10, wherein the method further comprises forming one or more photodetectors positioned to receive excitation energy that passes through the grating coupler.

12. The method of any of claims 10-11, wherein the grating coupler is a first optical grating coupler, and the method further comprises forming a second optical coupler optically coupled to the first waveguide and configured to receive the excitation energy from the first waveguide and to couple the excitation energy to a photodetector positioned in the integrated device.

13. The method of any of claims 10-12, wherein the method further comprises:
disposing a metal layer on a surface of the integrated device;
wherein the plurality of sample wells is formed through the metal layer.

14. The method of claim 13, wherein at least one of the plurality of sample wells comprises a bottom surface proximate to the first waveguide, the bottom surface being recessed through the metal layer.

## Patentansprüche

1. Integrierte Vorrichtung (1-102), umfassend:
eine Vielzahl von Probenmulden (1-108);
einen ersten optischen Wellenleiter (1-220), der konfiguriert ist zum Einkoppeln einer Anregungsenergie in einen ersten Anteil der Vielzahl von Probenmulden;
einen zweiten optischen Wellenleiter (1-220), der konfiguriert ist zum Einkoppeln der Anregungsenergie in einen zweiten Anteil der Vielzahl von Probenmulden; und
einen Gitterkoppler (1-216, 2-110, 2-200), der ein Gittergebiet (2-210) aufweist und konfiguriert ist zum Empfangen der Anregungsenergie von einer optischen Quelle, die sich außerhalb der integrierten Vorrichtung befindet, und zum Einkoppeln der Anregungsenergie in den ersten optischen Wellenleiter und den zweiten optischen Wellenleiter;
einen ersten Ausgangswellenleiter (2-120), der über mindestens einen optischen Splitter mit dem Gitterkoppler an einer Seite des Gittergebiets gekoppelt ist und mit einer ersten Vielzahl von optischen Wellenleitern gekoppelt ist, die den ersten optischen Wellenleiter beinhalten; und
einen zweiten Ausgangswellenleiter (2-120), der über mindestens einen optischen Splitter mit dem Gitterkoppler an der Seite des Gittergebiets gekoppelt ist und mit einer zweiten Vielzahl von optischen Wellenleitern gekoppelt ist, die den zweiten optischen Wellenleiter beinhalten,
wobei sich der erste Ausgangswellenleiter näher als der zweite Ausgangswellenleiter an dem Zentrum der Seite des Gittergebiets befindet und wobei der erste Ausgangswellenleiter eine geringere Breite als der zweite Ausgangswellenleiter aufweist.

2. Integrierte Vorrichtung nach Anspruch 1, wobei die integrierte Vorrichtung ferner einen oder mehrere Fotodetektoren umfasst, die angeordnet sind, um die Anregungsenergie zu empfangen, die den Gitterkoppler durchläuft.

3. Integrierte Vorrichtung nach einem der Ansprüche 1 bis 2, wobei der Gitterkoppler ein erster optischer Gitterkoppler ist und wobei die integrierte Vorrichtung ferner einen zweiten optischen Koppler umfasst, der mit dem ersten Wellenleiter optisch gekoppelt ist und konfiguriert ist zum Empfangen der Anregungsenergie von dem ersten Wellenleiter und zum Einkoppeln der Anregungsenergie in einen Fotodetektor, der sich in der integrierten Vorrichtung befindet.

4. Integrierte Vorrichtung nach einem der Ansprüche 1 bis 3, wobei die integrierte Vorrichtung ferner umfasst:
eine Metallschicht, die auf einer Oberfläche der integrierten Vorrichtung angebracht ist;
wobei die Vielzahl von Probenmulden durch die Metallschicht gebildet ist.

5. Integrierte Vorrichtung nach Anspruch 4, wobei mindestens eine aus der Vielzahl von Probenmulden eine Unterseite in der Nähe des ersten Wellenleiters umfasst, wobei die Unterseite durch die Metallschicht vertieft ist.

6. Integrierte Vorrichtung nach Anspruch 5, wobei sich die Unterseite in einem Abstand von der Metallschicht befindet, der zwischen 100 nm und 350 nm beträgt.

7. Integrierte Vorrichtung nach Anspruch 5, wobei sich die Unterseite in einem Abstand von dem ersten optischen Wellenleiter befindet, der zwischen 10nm und 200 nm beträgt.

8. Integrierte Vorrichtung nach einem der Ansprüche 4 bis 7, wobei die Metallschicht eine Aluminiumschicht und eine Titannitridschicht beinhaltet und wobei sich die Aluminiumschicht in der Nähe des ersten Wellenleiters und des zweiten Wellenleiters befindet.

9. Integrierte Vorrichtung nach einem der Ansprüche 1 bis 8, wobei das optische Gitter ein geätztes Gebiet umfasst, das in einer Schicht aus Siliciumnitrid gebildet ist.

10. Verfahren zum Bilden einer integrierten Vorrichtung, wobei das Verfahren umfasst:
Bilden einer Vielzahl von Probenmulden (1-108);
Bilden eines ersten optischen Wellenleiters (1-220), der konfiguriert ist zum Einkoppeln einer Anregungsenergie in einen ersten Anteil der Vielzahl von Probenmulden;
Bilden eines zweiten optischen Wellenleiters (1-220), der konfiguriert ist zum Einkoppeln der Anregungsenergie in einen zweiten Anteil der Vielzahl von Probenmulden; und
Bilden eines Gitterkopplers (1-216, 2-110, 2-200), der ein Gittergebiet (2-210) aufweist und konfiguriert ist zum Empfangen der Anregungsenergie von einer optischen Quelle, die sich außerhalb der integrierten Vorrichtung befindet, und zum Einkoppeln der Anregungsenergie in den ersten optischen Wellenleiter und den zweiten optischen Wellenleiter;
Bilden eines ersten Ausgangswellenleiters (2-120), der über mindestens einen optischen Splitter mit dem Gitterkoppler an einer Seite des Gittergebiets gekoppelt ist und mit einer ersten Vielzahl von optischen Wellenleitern gekoppelt ist, die den ersten optischen Wellenleiter beinhalten; und
Bilden eines zweiten Ausgangswellenleiters (2-120), der über mindestens einen optischen Splitter mit dem Gitterkoppler an der Seite des Gittergebiets gekoppelt ist und mit einer zweiten Vielzahl von optischen Wellenleitern gekoppelt ist, die den zweiten optischen Wellenleiter beinhalten,
wobei sich der erste Ausgangswellenleiter näher als der zweite Ausgangswellenleiter an dem Zentrum der Seite des Gittergebiets befindet und wobei der erste Ausgangswellenleiter eine geringere Breite als der zweite Ausgangswellenleiter aufweist.

11. Verfahren nach Anspruch 10, wobei das Verfahren ferner ein Bilden eines oder mehrerer Fotodetektoren umfasst, die angeordnet sind, um die Anregungsenergie zu empfangen, die den Gitterkoppler durchläuft.

12. Verfahren nach einem der Ansprüche 10 bis 11, wobei der Gitterkoppler ein erster optischer Gitterkoppler ist und wobei das Verfahren ferner ein Bilden eines zweiten optischen Kopplers umfasst, der mit dem ersten Wellenleiter optisch gekoppelt ist und konfiguriert ist zum Empfangen der Anregungsenergie von dem ersten Wellenleiter und zum Einkoppeln der Anregungsenergie in einen Fotodetektor, der sich in der integrierten Vorrichtung befindet.

13. Verfahren nach einem der Ansprüche 10 bis 12, wobei das Verfahren ferner umfasst:
Anbringen einer Metallschicht auf einer Oberfläche der integrierten Vorrichtung;
wobei die Vielzahl von Probenmulden durch die Metallschicht gebildet ist.

14. Verfahren nach Anspruch 13, wobei mindestens eine aus der Vielzahl von Probenmulden eine Unterseite in der Nähe des ersten Wellenleiters umfasst, wobei die Unterseite durch die Metallschicht vertieft ist.

## Revendications

1. Dispositif intégré (1-102) comprenant :
une pluralité de puits d'échantillon (1-108) ;
un premier guide d'ondes optique (1-220) configuré pour coupler l'énergie d'excitation à une première partie de la pluralité de puits d'échantillon ;
un second guide d'onde optique (1-220) configuré pour coupler l'énergie d'excitation à une seconde partie de la pluralité de puits d'échantillon ; et
un coupleur à réseau (1-216, 2-110, 2-200) comportant une région de réseau (2-210) et configuré pour recevoir l'énergie d'excitation d'une source optique positionnée à l'extérieur du dispositif intégré, et pour coupler l'énergie d'excitation au premier guide d'ondes optique et au second guide d'ondes optique ;
un premier guide d'ondes de sortie (2-120) couplé au coupleur à réseau au niveau d'un côté de la région de réseau et couplé à une première pluralité de guides d'ondes optiques, comprenant le premier guide d'ondes optiques, par l'intermédiaire d'au moins un séparateur optique ; et
un second guide d'ondes de sortie (2-120) couplé au coupleur à réseau au niveau du côté de la région de réseau et couplé à une seconde pluralité de guides d'ondes optiques, comprenant le second guide d'ondes optiques, par l'intermédiaire d'au moins un séparateur optique,
le premier guide d'ondes de sortie étant plus proche du centre du côté de la région de réseau que le second guide d'ondes de sortie, et le premier guide d'ondes de sortie ayant une largeur inférieure à celle du second guide d'ondes de sortie.

2. Dispositif intégré selon la revendication 1, le dispositif intégré comprenant en outre un ou plusieurs photodétecteurs positionnés pour recevoir une énergie d'excitation qui passe à travers le coupleur à réseau.

3. Dispositif intégré selon l'une quelconque des revendications 1 et 2, le coupleur à réseau étant un premier coupleur à réseau optique, et le dispositif intégré comprenant en outre un second coupleur optique couplé optiquement au premier guide d'ondes et configuré pour recevoir l'énergie d'excitation du premier guide d'ondes et pour coupler l'énergie d'excitation à un photodétecteur positionné dans le dispositif intégré.

4. Dispositif intégré selon l'une quelconque des revendications 1 à 3, le dispositif intégré comprenant en outre :
une couche métallique disposée sur une surface du dispositif intégré ;
la pluralité de puits d'échantillon étant formée à travers la couche métallique.

5. Dispositif intégré selon la revendication 4, au moins l'un de la pluralité de puits d'échantillon comprenant une surface inférieure proche du premier guide d'ondes, la surface inférieure étant évidée à travers la couche métallique.

6. Dispositif intégré selon la revendication 5, la surface inférieure étant positionnée à une distance de la couche métallique qui est comprise entre 100 nm et 350 nm.

7. Dispositif intégré selon la revendication 5, la surface inférieure étant positionnée à une distance du premier guide d'ondes optique qui est comprise entre 10 nm et 200 nm.

8. Dispositif intégré selon l'une quelconque des revendications 4 à 7, la couche métallique comprenant une couche d'aluminium et une couche de nitrure de titane, et la couche d'aluminium étant proche des premier et second guides d'ondes.

9. Dispositif intégré selon l'une quelconque des revendications 1 à 8, le réseau optique comprenant une région gravée formée dans une couche de nitrure de silicium.

10. Procédé de formation d'un dispositif intégré, le procédé comprenant :
la formation d'une pluralité de puits d'échantillons (1-108) ;
la formation d'un premier guide d'ondes optique (1-220) configuré pour coupler l'énergie d'excitation à une première partie de la pluralité de puits d'échantillon ;
la formation d'un second guide d'onde optique (1-220) configuré pour coupler l'énergie d'excitation à une seconde partie de la pluralité de puits d'échantillon ; et
la formation d'un coupleur à réseau (1-216, 2-110, 2-200) ayant une région de réseau (2-210) et configuré pour recevoir l'énergie d'excitation d'une source optique positionnée à l'extérieur du dispositif intégré, et pour coupler l'énergie d'excitation au premier guide d'ondes optique et au second guide d'ondes optique ;
la formation d'un premier guide d'ondes de sortie (2-120) couplé au coupleur à réseau au niveau d'un côté de la région de réseau et couplé à une première pluralité de guides d'ondes optiques, comprenant le premier guide d'ondes optique, par l'intermédiaire d'au moins un séparateur optique ; et
la formation d'un second guide d'ondes de sortie (2-120) couplé au coupleur à réseau au niveau du côté de la région de réseau et couplé à une seconde pluralité de guides d'ondes optiques, comprenant le second guide d'ondes optiques, par l'intermédiaire d'au moins un séparateur optique,
le premier guide d'ondes de sortie étant plus proche du centre du côté de la région de réseau que le second guide d'ondes de sortie, et le premier guide d'ondes de sortie ayant une largeur inférieure à celle du second guide d'ondes de sortie.

11. Procédé selon la revendication 10, le procédé comprenant en outre la formation d'un ou plusieurs photodétecteurs positionnés pour recevoir une énergie d'excitation qui passe à travers le coupleur à réseau.

12. Procédé selon l'une quelconque des revendications 10 et 11, le coupleur à réseau étant un premier coupleur à réseau optique, et le procédé comprenant en outre la formation d'un second coupleur optique couplé optiquement au premier guide d'ondes et configuré pour recevoir l'énergie d'excitation du premier guide d'ondes et pour coupler l'énergie d'excitation à un photodétecteur positionné dans le dispositif intégré.

13. Procédé selon l'une quelconque des revendications 10 à 12, le procédé comprenant en outre :
la disposition d'une couche métallique sur une surface du dispositif intégré ;
la pluralité de puits d'échantillon étant formée à travers la couche métallique.

14. Procédé selon la revendication 13, au moins l'un de la pluralité de puits d'échantillon comprenant une surface inférieure proche du premier guide d'ondes, la surface inférieure étant évidée à travers la couche métallique.
